# EUROPEAN PATENT APPLICATION

(11) **EP 4 716 323 A1**
(43) Date of publication of application: **25.03.2026**
(21) Application number: 24807505.3
(22) Date of filing: 13.05.2024
(51) Int. Cl.: H04W 64/00, H04W 8/00, H04B 7/04, G01S 7/00, G01S 13/46, H04W 24/08

(54) **METHOD AND DEVICE FOR SENSING ON BASIS OF RECONFIGURABLE INTELLIGENT SURFACE (RIS) IN JOINT COMMUNICATION AND SENSING (JCAS) SYSTEM**

(30) Priority: 15.05.2023 KR 20230062669; 15.05.2023 KR 20230062690
(71) Applicant: LG Electronics Inc., Yeongdeungpo-gu Seoul 07336 (KR)
(72) Inventor: KO, Woosuk, Seoul 06772 (KR); SEO, Hanbyul, Seoul 06772 (KR)
(74) Representative: Maikowski & Ninnemann Patentanwälte Partnerschaft mbB
(86) International application number: PCT/KR2024/006457
(87) International publication number: WO 2024/237634

(57) **Abstract**

Proposed is an operational method of a first device (100) in a wireless communication system. The method comprises the steps of: receiving, in a first time domain, a first inter-device reference signal from a second device (200), on the basis of a first angle; and transmitting, in the first time domain, a second inter-device reference signal, on the basis of a second angle obtained by applying a first angular difference to the first angle, wherein one or more angle differences including the first angular difference may be associated with one or more time domains, respectively.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method for performing, by a first device, wireless communication may be proposed. For example, the method may comprise: receiving, from a second device, a first inter-device reference signal within a first time region, based on a first angle; and transmitting a second inter-device reference signal within the first time region, based on a second angle obtained by applying a first angle difference to the first angle, wherein each of at least one angle difference including the first angle difference may be related to each of at least one time region including the first time region, and wherein the at least one time region may be repeated.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a first inter-device reference signal within a first time region, based on a first angle; and transmitting a second inter-device reference signal within the first time region, based on a second angle obtained by applying a first angle difference to the first angle, wherein each of at least one angle difference including the first angle difference may be related to each of at least one time region including the first time region, and wherein the at least one time region may be repeated.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, a first inter-UE reference signal within a first time region, based on a first angle; and transmitting a second inter-UE reference signal within the first time region, based on a second angle obtained by applying a first angle difference to the first angle, wherein each of at least one angle difference including the first angle difference may be related to each of at least one time region including the first time region, and wherein the at least one time region may be repeated.

According to an embodiment of the present disclosure, a non-transitory computer-readable storage medium storing instructions may be proposed. For example, the instructions, based on being executed, may cause a first device to: receive, from a second device, a first inter-device reference signal within a first time region, based on a first angle; and transmit a second inter-device reference signal within the first time region, based on a second angle obtained by applying a first angle difference to the first angle, wherein each of at least one angle difference including the first angle difference may be related to each of at least one time region including the first time region, and wherein the at least one time region may be repeated.

According to an embodiment of the present disclosure, a method for performing, by a second device, wireless communication may be proposed. For example, the method may comprise: transmitting, to a first device, a first inter-device reference signal; and receiving, from the first device, a second inter-device reference signal, wherein the first inter-device reference signal may be received to the first device within a first time region, based on a first angle, wherein the second inter-device reference signal may be transmitted from the first device within the first time region, based on a second angle obtained by applying a first angle difference to the first angle, and wherein each of at least one angle difference including the first angle difference may be related to each of at least one time region including the first time region.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, a first inter-device reference signal; and receiving, from the first device, a second inter-device reference signal, wherein the first inter-device reference signal may be received to the first device within a first time region, based on a first angle, wherein the second inter-device reference signal may be transmitted from the first device within the first time region, based on a second angle obtained by applying a first angle difference to the first angle, and wherein each of at least one angle difference including the first angle difference may be related to each of at least one time region including the first time region.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example of an architecture in a 5G system in which positioning for a UE connected to a Next Generation-Radio Access Network (NG-RAN) or E-UTRAN is possible, according to an embodiment of the present disclosure.
FIG. 10 shows an implementation example of a network for measuring a position of a UE, according to an embodiment of the present disclosure.
FIG. 11 shows an example of a protocol layer used to support LTE Positioning Protocol (LPP) message transmission between an LMF and a UE, according to an embodiment of the present disclosure.
FIG. 12 shows an example of a protocol layer used to support NR Positioning Protocol A (NRPPa) PDU transmission between an LMF and an NG-RAN node, according to an embodiment of the present disclosure.
FIG. 13 shows an Observed Time Difference Of Arrival (OTDOA) positioning method according to an embodiment of the present disclosure.
FIG. 14 shows a double-side RTT, according to one embodiment of the present disclosure.
FIG. 15 shows a reconfigurable intelligent surface according to an embodiment of the present disclosure.
FIG. 16 shows values applied in a TDM manner when a reconfigurable intelligent surface reflects a signal incident thereon, according to an embodiment of the present disclosure.
FIG. 17 shows a procedure for a first device to perform wireless communication, according to one embodiment of the present disclosure.
FIG. 18 shows a procedure for a second device to perform wireless communication, according to one embodiment of the present disclosure.
FIG. 19 shows a communication system 1, based on an embodiment of the present disclosure.
FIG. 20 shows wireless devices, based on an embodiment of the present disclosure.
FIG. 21 shows a signal process circuit for a transmission signal, based on an embodiment of the present disclosure.
FIG. 22 shows another example of a wireless device, based on an embodiment of the present disclosure.
FIG. 23 shows a hand-held device, based on an embodiment of the present disclosure.
FIG. 24 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

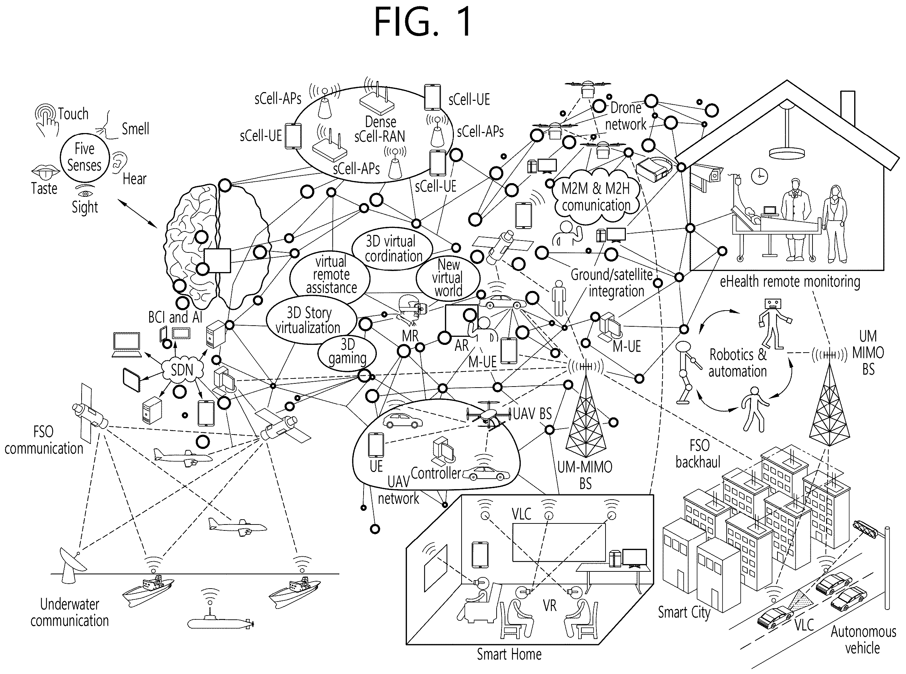

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

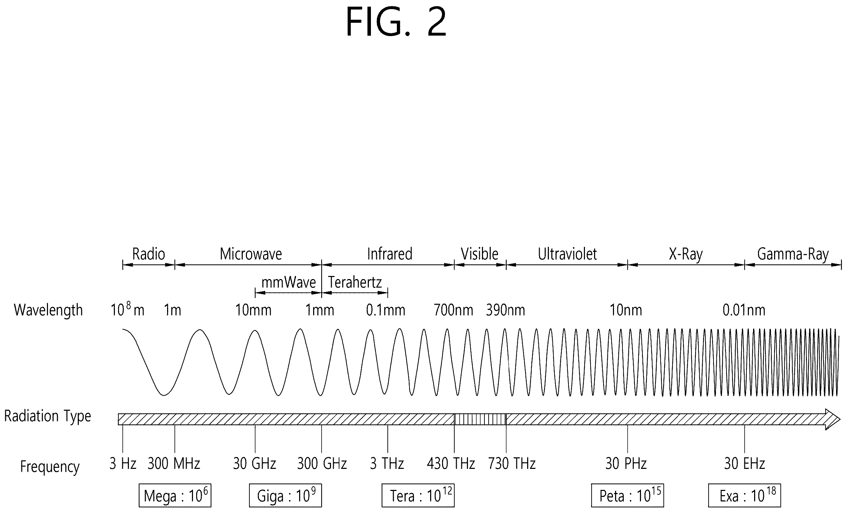

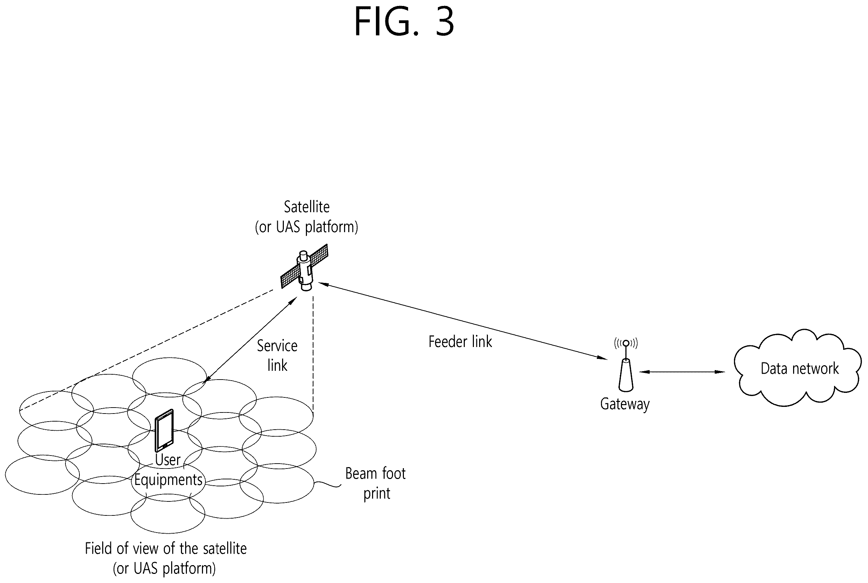

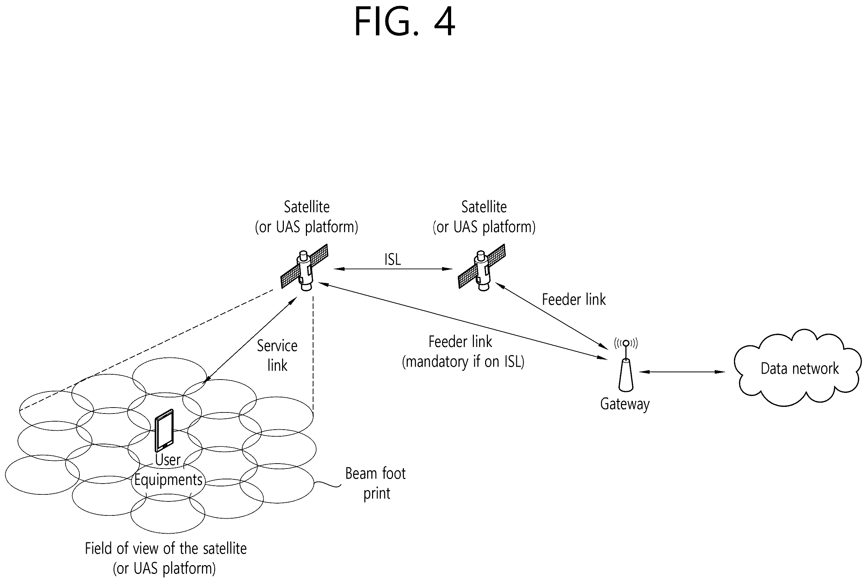

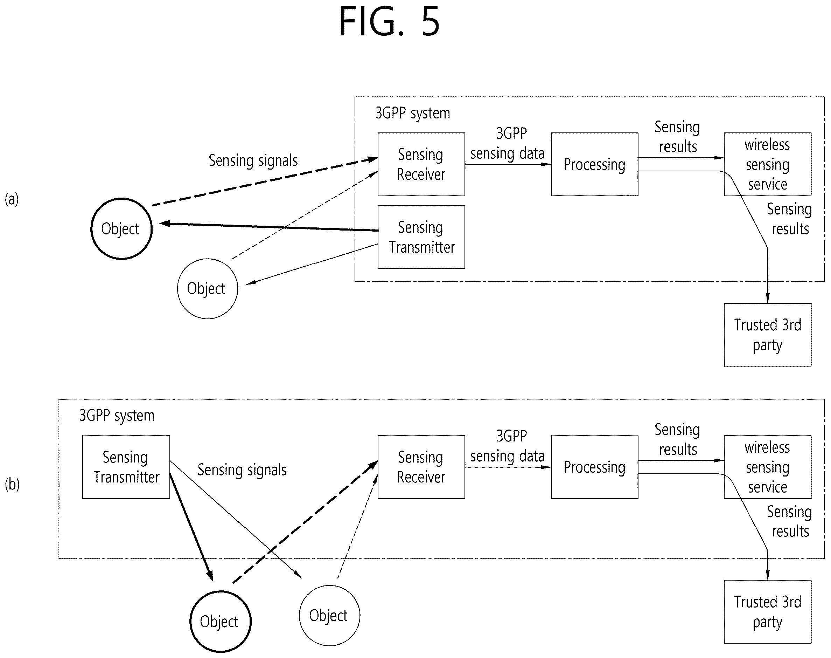

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

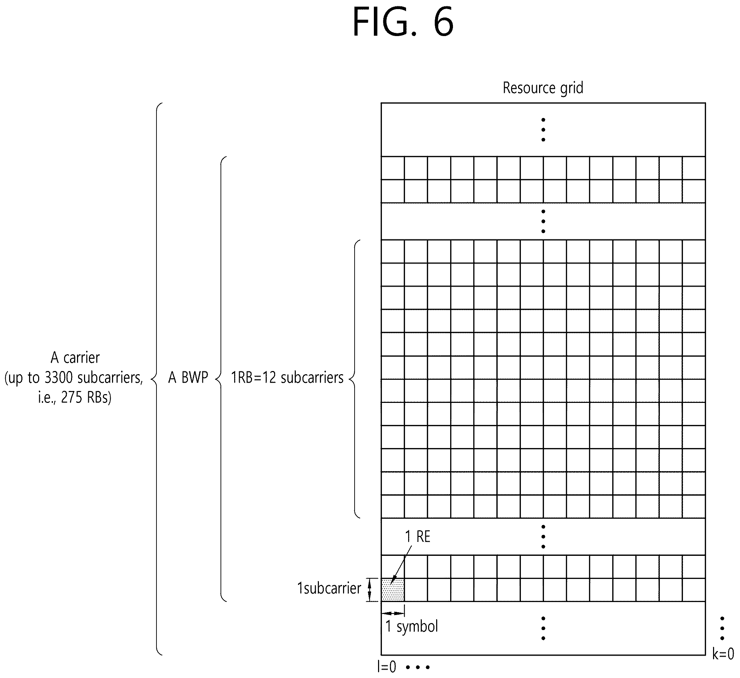

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

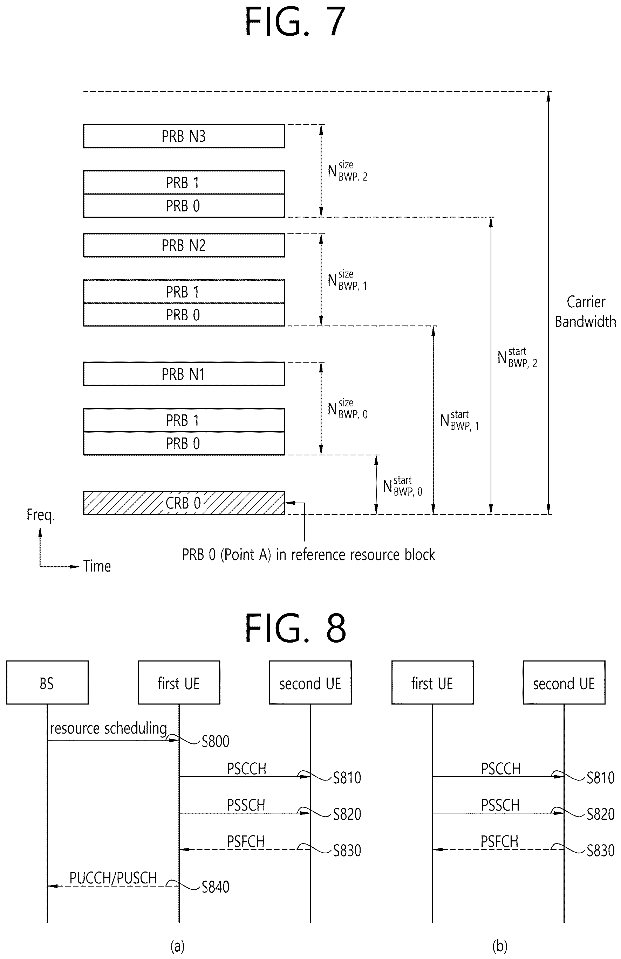

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

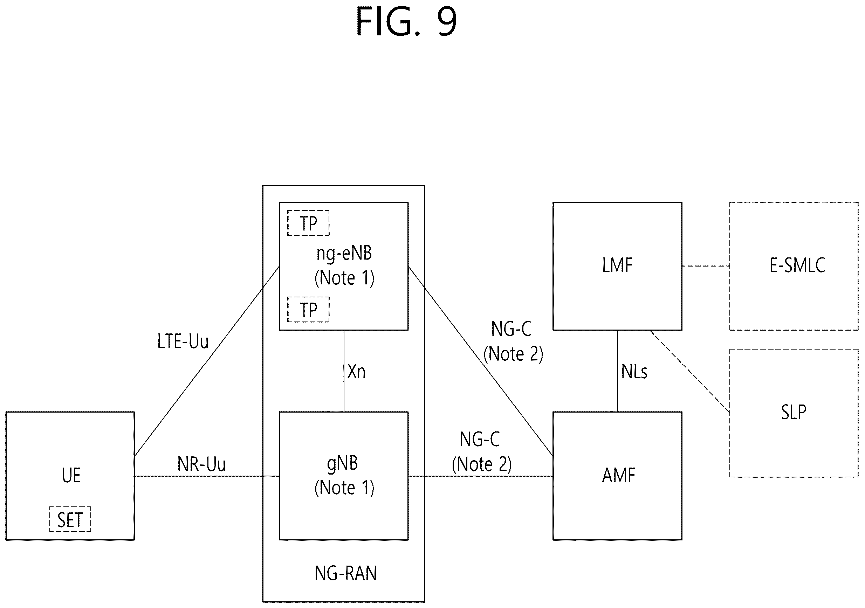

FIG. 9 shows an example of an architecture in a 5G system in which positioning for a UE connected to a Next Generation-Radio Access Network (NG-RAN) or E-UTRAN is possible, according to an embodiment of the present disclosure. The embodiment of FIG. 9 may be combined with various embodiments of the present disclosure.

Referring to FIG. 9, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function, LMF. Upon receiving the location service request, the LMF may process the location service request and return a processing request including an estimated position or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for position estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location center (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a position estimation value for the target UE and accuracy of position estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a position of the UE. For example, the UE may include an independent positioning function such as a global positioning system (GPS), and may report the position of the UE independent of NG-RAN transmission. Positioning information obtained independently as such may be utilized as assistance information of the positioning information obtained from the network.

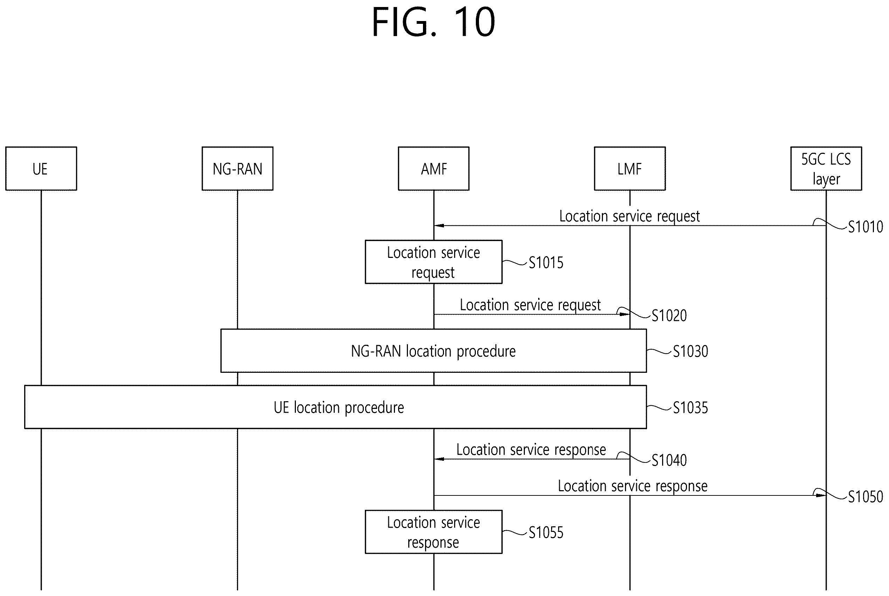

FIG. 10 shows an implementation example of a network for measuring a position of a UE, according to an embodiment of the present disclosure. The embodiment of FIG. 10 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 10. That is, it may be assumed in FIG. 10 that the UE is in a connected mode. However, due to signaling and data inactivation or the like, the signaling connection may be released by NG-RAN while a positioning process is performed.

A network operation process for measuring a position of a UE will be described in detail with reference to FIG. 10. In step S1010, a 5GC entity such as GMLC may request a serving AMF to provide a location service for measuring a position of a target UE. However, even if the GMLC does not request for the location service, based on step S1015, the serving AMF may determine that the location service for measuring the position of the target UE is required. For example, to measure the position of the UE for an emergency call, the serving AMF may determine to directly perform the location service.

Thereafter, the AMF may transmit the location service request to an LMF based on step S1020, and the LMF may start location procedures to obtain position measurement data or position measurement assistance data together with a serving ng-eNB and a serving gNB, according to step S1030. Additionally, based on step S1035, the LMF may start location procedures for downlink positioning together with the UE. For example, the LMF may transmit assistance data defined in 3GPP TS 36.355, or may obtain a position estimation value or a position measurement value. Meanwhile, step S1035 may be performed additionally after step S1030 is performed, or may be performed instead of step S1030.

In step S1040, the LMF may provide a location service response to the AMF. In addition, the location service response may include information on whether position estimation of the UE is successful and a position estimation value of the UE. Thereafter, if the procedure of FIG. 10 is initiated by step S1010, in step S1050, the AMF may transfer the location service response to a 5GC entity such as GMLC, and if the procedure of FIG. 10 is initiated by step S1015, in step S1055, the AMF may use the location service response to provide a location service related to an emergency call or the like.

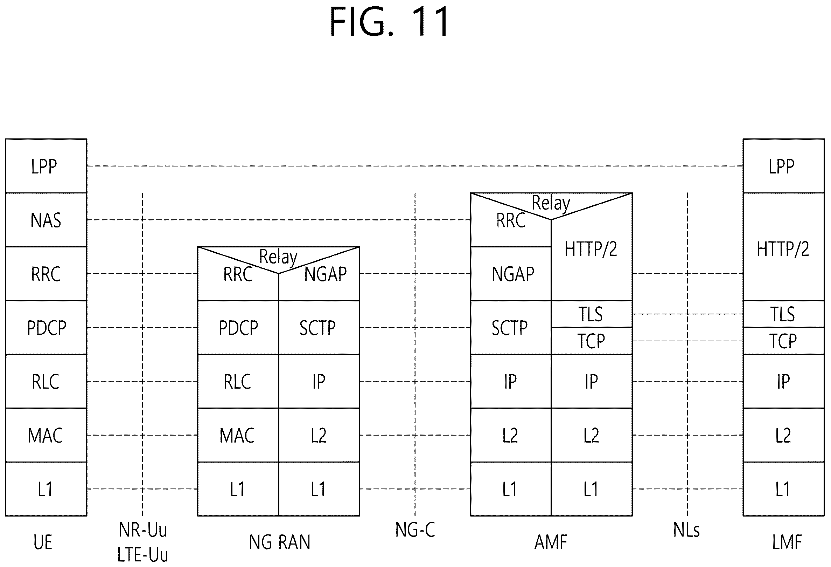

FIG. 11 shows an example of a protocol layer used to support LTE Positioning Protocol (LPP) message transmission between an LMF and a UE, according to an embodiment of the present disclosure. The embodiment of FIG. 11 may be combined with various embodiments of the present disclosure.

An LPP PDU may be transmitted through a NAS PDU between an AMF and the UE. Referring to FIG. 11, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

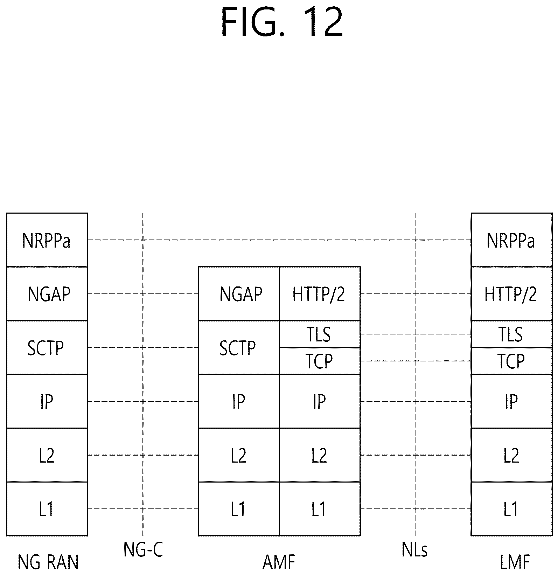

FIG. 12 shows an example of a protocol layer used to support NR Positioning Protocol A (NRPPa) PDU transmission between an LMF and an NG-RAN node, according to an embodiment of the present disclosure. The embodiment of FIG. 12 may be combined with various embodiments of the present disclosure.

Referring to FIG. 12, the NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., position measurement information or the like), and a second type is a non UE associated procedure for transferring information (e.g., , gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

### (1) OTDOA (Observed Time Difference Of Arrival)

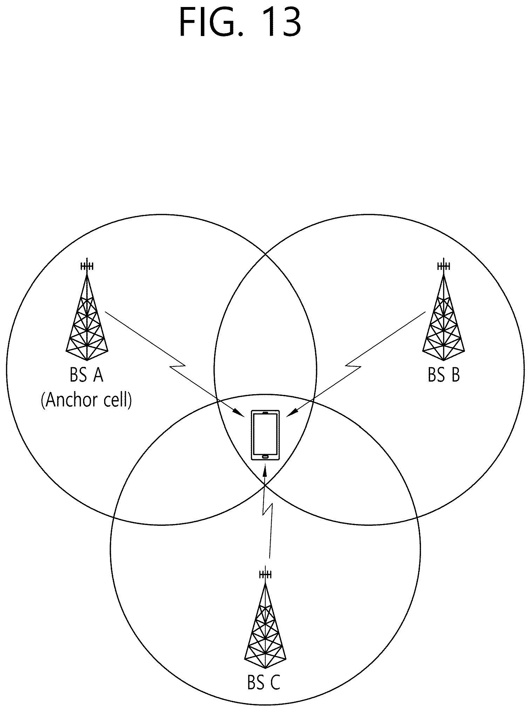

FIG. 13 shows an Observed Time Difference Of Arrival (OTDOA) positioning method according to an embodiment of the present disclosure. The embodiment of FIG. 13 may be combined with various embodiments of the present disclosure.

Referring to FIG. 13, the OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a position of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a position of a UE. In this case, since accuracy and/or uncertainty for each TOA measurement may be present, the estimated position of the UE may be known as a specific range based on measurement uncertainty.

For example, RSTD for two TPs may be calculated based on Equation 1.$RSTDi , 1 = \frac{\sqrt{{\left({x}_{t}-{x}_{i}\right)}^{2} + {\left({y}_{t}-{y}_{i}\right)}^{2}}}{c} - \frac{\sqrt{{\left({x}_{t}-{x}_{1}\right)}^{2} + {\left({y}_{t}-{y}_{1}\right)}^{2}}}{c} + \left({T}_{i}-{T}_{1}\right) + \left({n}_{i}-{n}_{1}\right)$

Herein, c may be the speed of light, {xt, yt} may be a (unknown) coordinate of a target UE, {xi, yi} may be a coordinate of a (known) TP, and {x1, y1} may be a coordinate of a reference TP (or another TP). Herein, (Ti-T1) may be referred to as "real time differences (RTDs)" as a transmission time offset between two TPs, and ni, n1 may represent values related to UE TOA measurement errors.

### (2) E-CID (Enhanced Cell ID)

In a cell ID (CID) positioning method, a position of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE position estimation value. In the E-CID positioning method, although some of the measurement methods which are the same as those used in a measurement control system of an RRC protocol may be used, additional measurement is not performed in general only for position measurement of the UE. In other words, a measurement configuration or a measurement control message may not be provided additionally to measure the position of the UE. Also, the UE may not expect that an additional measurement operation only for position measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.
- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.$TADV Type 1 = \left(ng-eNb Rx-Tx time difference\right) + \left(UE E-UTRA Rx-Tx time difference\right)$$TADV Type 2 = ng - eNb Rx - Tx time difference$

Meanwhile, AoA may be used to measure a direction of the UE. The AoA may be defined as an estimation angle with respect to the position of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

### (3) UTDOA (Uplink Time Difference of Arrival)

UTDOA is a method of determining a position of a UE by estimating an arrival time of SRS. When calculating an estimated SRS arrival time, the position of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

### (4) RTT (Round Trip Time)

RTT is a positioning technology that may measure the distance between two entities even if the target entity and the server entity are out of time synchronization. If RTT is performed with multiple server entities, the distances from each server entity may be measured separately. And, by drawing a circle using the measured distances from each server entity, absolute positioning for the target entity may be performed by the point where each circle intersects. For example, it may be referred to as multi-RTT.

The RTT between two entities can be performed as follows. Entity #1 may transmit PRS #1 at t1, and Entity #2 may receive the RRS #1 at t2. After the PRS #1 is received by the Entity #2, Entity #2 may transmit PRS #2 at t3, and Entity #1 may receive the PRS #2 at t4. In this case, the distance D between the two entities can be derived as follows.$D = c \times \left\{\left(t4-t1\right)-\left(t3-t2\right)\right\} / 2 \left(Here,C is the speed of light\right)$

For RTT between UE and gNB, the distance between UE and gNB can be derived based on Equation 2 above using the UE Rx - Tx time difference and gNB Rx - Tx time difference in the table below.

### (5) double-side RTT

Double-side RTT is a positioning technology that can measure the distance between two entities even when there is a sampling clock frequency offset between the target and server entities.

The method for performing a double-sided RTT between two entities is as follows,

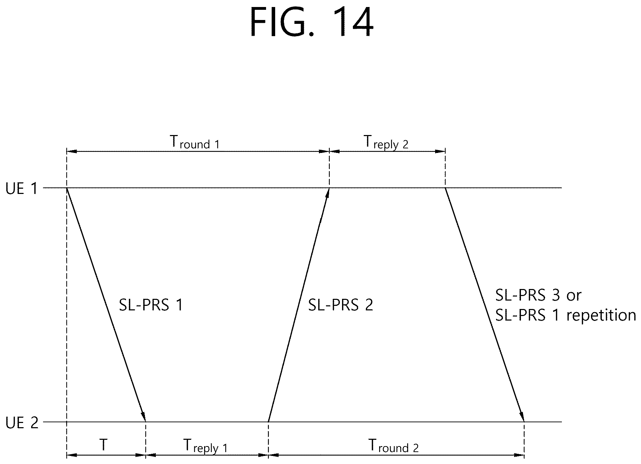

FIG. 14 shows a double-side RTT, according to one embodiment of the present disclosure. The embodiment of FIG. 14 may be combined with various embodiments of the present disclosure.

Double-side RTT is widely used in ultra-wideband (UWB) positioning and may reduce the impact of clock errors. Referring to FIG. 14, the propagation delay T may be estimated from two measurement values (i.e., Tround1, Tround2, Treply1, Treply2). For example, the propagation delay T may be estimated based on Equation 3.$\begin{matrix}\hat{T} = \frac{1}{2} \left({T}_{round 1}-{T}_{reply 1}\right) \\ \hat{T} = \frac{1}{2} \left({T}_{round 2}-{T}_{reply 2}\right)\end{matrix}$

And, T_{round1}*T_{round2}-T_{reply1}*T_{reply2} may be obtained based on Equation 4. $\begin{matrix}{T}_{round 1} \times {T}_{round 2} - {T}_{reply 1} \times {T}_{reply 2} \\ = 4 {\hat{T}}^{2} + 2 \hat{T} \left({T}_{reply 1}+{T}_{reply 2}\right) = \hat{T} \left({T}_{round 1}+{T}_{round 2}+{T}_{reply 1}+{T}_{reply 2}\right)\end{matrix}$ Where $\begin{matrix}{T}_{round 1} \times {T}_{round 2} = \left(2\hat{T}+{T}_{reply 1}\right) \left(2\hat{T}+{T}_{reply 2}\right) \\ = 4 {\hat{T}}^{2} + 2 \hat{T} \left({T}_{reply 1}+{T}_{reply 2}\right) + {T}_{reply 1} \times {T}_{reply 2}\end{matrix}$

Accordingly, the propagation delay T may be estimated as Equation 5.$\hat{T} = \frac{{T}_{round 1} \times {T}_{round 2} - {T}_{reply 1} \times {T}_{reply 2}}{\left({T}_{round 1}+{T}_{round 2}+{T}_{reply 1}+{T}_{reply 2}\right)}$

In this case, the propagation delay estimation error due to clock error can be obtained based on Equation 6. $error = \hat{T} - T \approx \frac{\left({e}_{UE 1}+{e}_{UE 2}\right)}{2} \hat{T}$ *where*
*e*_{*UE*1} *and e*_{*UE*2} *is the clock offset of UE1 and UE 2;*
*T̂ is estimated propagation delay between UE 1 and UE 2.*

Table 3 shows an example of reference signal time difference (RSTD). The RSTD in Table 3 may be applied for SL positioning.

**[Table 3]**

| | |
|---|---|
| Definition | The relative timing difference between the E-UTRA neighbour cell j and the E-UTRA reference cell i, defined as T_{SubframeRxj} - T_{SubframeRxi}, where: T_{SubframeRxj} is the time when the UE receives the start of one subframe from E-UTRA cell j T_{SubframeRxi} is the time when the UE receives the corresponding start of one subframe from E-UTRA cell i that is closest in time to the subframe received from E-UTRA cell j. The reference point for the observed subframe time difference shall be the antenna connector of the UE. |
| Applicable for | RRC CONNECTED inter-RAT |

Table 4 shows an example of downlink PRS reference signal received power (DL PRS RSRP). The DL PRS RSRP in Table 4 may be applied for SL positioning.

**[Table 4]**

| | |
|---|---|
| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth. |
| | For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
| Applicable for | RRC_CONNECTED intra-frequency, RRC _CONNECTED inter-frequency |

Table 5 shows an example of downlink reference signal time difference (DL RSTD). The DL RSTD in Table 5 may be applied for SL positioning.

**[Table 5]**

| | |
|---|---|
| Definition | DL reference signal time difference (DL RSTD) the positioning node *j* and the reference positioning node *i*, is defined as T_{SubframeRxj} - T_{SubframeRxi}, |
| | Where: |
| | T_{SubframeRxj} is the time when the UE receives the start of one subframe from positioning node*j*. |
| | T_{SubframeRxi} is the time when the UE receives the corresponding start of one subframe from positioning node *i* that is closest in time to the subframe received from positioning node*j*. |
| | Multiple DL PRS resources can be used to determine the start of one subframe from a positioning node. |
| | For frequency range 1, the reference point for the DL RSTD shall be the antenna connector of the UE. For frequency range 2, the reference point for the DL RSTD shall be the antenna of the UE. |
| Applicable for | RRC _CONNECTED intra-frequency, RRC _CONNECTED inter-frequency |

Table 6 shows an example of UE Rx-Tx time difference. The UE Rx-Tx time difference in Table 6 may be applied for SL positioning.

**[Table 6]**

| | |
|---|---|
| Definition | The UE Rx - Tx time difference is defined as T_{UE-RX} - T_{UE-TX} |
| | Where: |
| | T_{UE-RX} is the UE received timing of downlink subframe #i from a positioning node, defined by the first detected path in time. |
| | T_{UE-TX} is the UE transmit timing of uplink subframe #*j* that is closest in time to the subframe #i received from the positioning node. |
| | Multiple DL PRS resources can be used to determine the start of one subframe of the first arrival path of the positioning node. |
| | For frequency range 1, the reference point for T_{UE-RX} measurement shall be the Rx antenna connector of the UE and the reference point for T_{UE-TX} measurement shall be the Tx antenna connector of the UE. For frequency range 2, the reference point for T_{UE-RX} measurement shall be the Rx antenna of the UE and the reference point for T_{UE-TX} measurement shall be the Tx antenna of the UE. |
| Applicable for | RRC _CONNECTED intra-frequency, RRC _CONNECTED inter-frequency |

Table 7 shows an example of uplink relative time of arrival (UL RTOA) (T_{UL-RTOA}). The UL RTOA in Table 7 may be applied for SL positioning.

**[Table 7]**

| | | |
|---|---|---|
| Definition | [The UL Relative Time of Arrival (T_{UL-RTOA}) is the beginning of subframe i containing SRS received in positioning node *j*, relative to the configurable reference time.] | |
| | Multiple SRS resources for positioning can be used to determine the beginning of one subframe containing SRS received a positioning node. | |
| | The reference point for T_{UL-RTOA} shall be: | |
| | | - for type 1-C base station TS 38.104 [9]: the Rx antenna connector, |
| | | - for type 1-O or 2-O base station TS 38.104 [9]: the Rx antenna, |
| | | - for type 1-H base station TS 38.104 [9]: the Rx Transceiver Array Boundary connector. |

Table 8 shows an example of gNB Rx-Tx time difference. The gNB Rx-Tx time difference in Table 8 may be applied for SL positioning.

**[Table 8]**

| | | |
|---|---|---|
| Definition | The gNB Rx - Tx time difference is defined as T_{gNB-RX} - T_{GNB-TX} | |
| | Where: | |
| | T_{gNB-RX} is the positioning node received timing of uplink subframe #*i* containing SRS associated with UE, defined by the first detected path in time. | |
| | T_{gNB-TX} is the positioning node transmit timing of downlink subframe #*j* that is closest in time to the subframe #*i* received from the UE. | |
| | Multiple SRS resources for positioning can be used to determine the start of one subframe containing SRS. | |
| | The reference point for T_{gNB-RX} shall be: | |
| | | - for type 1-C base station TS 38.104 [9]: the Rx antenna connector, |
| | | - for type 1-O or 2-O base station TS 38.104 [9]: the Rx antenna, |
| | | - for type 1-H base station TS 38.104 [9]: the Rx Transceiver Array Boundary connector. |
| | The reference point for T_{gNB-TX} shall be: | |
| | | - for type 1-C base station TS 38.104 [9]: the Tx antenna connector, |
| | | - for type 1-O or 2-O base station TS 38.104 [9]: the Tx antenna, |
| | | - for type 1-H base station TS 38.104 [9]: the Tx Transceiver Array Boundary connector. |

Table 9 shows an example of UL angle of arrival (UL AoA). The UL AoA in Table 9 may be applied for SL positioning.

**[Table 9]**

| | | |
|---|---|---|
| Definition | UL Angle of Arrival (UL AoA) is defined as the estimated azimuth angle and vertical angle of a UE with respect to a reference direction, wherein the reference direction is defined: | |
| | | - In the global coordinate system (GCS), wherein estimated azimuth angle is measured relative to geographical North and is positive in a counter-clockwise direction and estimated vertical angle is measured relative to zenith and positive to horizontal direction |
| | | - In the local coordinate system (LCS), wherein estimated azimuth angle is measured relative to x-axis of LCS and positive in a counter-clockwise direction and estimated vertical angle is measured relative to z-axis of LCS and positive to x-y plane direction. The bearing, downtilt and slant angles of LCS are defined according to TS 38.901 [15]. |
| | The UL-AoA is determined at the gNB antenna for an UL channel corresponding to this UE. | |

Table 10 shows an example of UL SRS reference signal received power (UL SRS RSRP). The UL SRS RSRP in Table 10 may be applied for SL positioning.

**[Table 10]**

| | |
|---|---|
| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. |
| | For frequency range 1 and 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |

Various embodiments of the present disclosure may be applied based on Table 11 to Table 30.

**[Table 11]**

| | | |
|---|---|---|
| 14.1.1.6 | | UE procedure for determining the subset of resources to be reported to higher layers in PSSCH resource selection in sidelink transmission mode 4 and in sensing measurement in sidelink transmission mode 3 |
| In sidelink transmission mode 4, when requested by higher layers in subframe *n* for a carrier, the UE shall determine the set of resources to be reported to higher layers for PSSCH transmission according to the steps described in this Subclause. Parameters *L*_{subCH} the number of sub-channels to be used for the PSSCH transmission in a subframe, *P*_{rsvp_TX} the resource reservation interval, and *prio_{TX}* the priority to be transmitted in the associated SCI format 1 by the UE are all provided by higher layers (described in [8]). | | |
| *Cᵣₑₛₑₗ* is determined according to Subclause 14.1.1.4B. | | |
| In sidelink transmission mode 3, when requested by higher layers in subframe *n* for a carrier, the UE shall determine the set of resources to be reported to higher layers in sensing measurement according to the steps described in this Subclause. Parameters *L*_{subCH}, *P*_{rsvp_TX} and *prio_{TX}* are all provided by higher layers (described in [11]). *Cᵣₑₛₑₗ* is determined by *Cᵣₑₛₑₗ* = 10*SL_RESOURCE_RESELECTION_COUNTER, where SL_RESOURCE_RESELECTION_COUNTER is provided by higher layers [11]. | | |
| ... | | |
| If partial sensing is configured by higher layers then the following steps are used: | | |
| | 1) A candidate single-subframe resource for PSSCH transmission *R_{x,y}* is defined as a set of *L*_{subCH} contiguous sub-channels with sub-channel *x+j* in subframe ${t}_{y}^{SL}$ where *j* = 0,...,L_{subCH}-1. The UE shall determine by its implementation a set of subframes which consists of at least Y subframes within the time interval [*n + T*₁*, n + T*₂] where selections of *T*₁ and *T*₂ are up to UE implementations under *T*₁≤4 and *T*₂ₘᵢₙ(*prio_{TX}*)≤*T₂*≤100, if *T*₂ₘᵢₙ(*prio_{TX}*) is provided by higher layers for *prio_{TX}*, otherwise 20 ≤ *T*₂ ≤ 100 . UE selection of *T*₂ shall fulfil the latency requirement and Y shall be greater than or equal to the high layer parameter *minNumCandidateSF.* The UE shall assume that any set of *L*_{subCH} contiguous sub-channels included in the corresponding PSSCH resource pool (described in 14.1.5) within the determined set of subframes correspond to one candidate single-subframe resource. The total number of the candidate single-subframe resources is denoted by *M*ₜₒₜₐₗ. | |
| | 2) If a subframe ${t}_{y}^{SL}$ is included in the set of subframes in Step 1, the UE shall monitor any subframe ${t}_{y - k \times {P}_{step}}^{SL}$ if k-th bit of the high layer parameter *gapCandidateSensing* is set to 1. The UE shall perform the behaviour in the following steps based on PSCCH decoded and S-RSSI measured in these subframes. | |
| | 3) The parameter *Th_{a,b}* is set to the value indicated by the i-th *SL-ThresPSSCH-RSRP* field in *SL-ThresPSSCH-RSRP-List* where i = (a - 1) * 8 *+ b.* | |

**[Table 12]**

| | | |
|---|---|---|
| | 4) The set *S_{A}* is initialized to the union of all the candidate single-subframe resources. The set S *_{B}* is initialized to an empty set. | |
| | 5) The UE shall exclude any candidate single-subframe resource *R*_{x,y} from the set *S_{A}* if it meets all the following conditions: | |
| | | - the UE receives an SCI format 1 in subframe ${t}_{m}^{SL}$, and "Resource reservation" field and "Priority" field in the received SCI format 1 indicate the values *P*_{rsvp_RX} and *prio_{RX}*, respectively according to Subclause 14.2.1. |
| | | - PSSCH-RSRP measurement according to the received SCI format 1 is higher than *Th*_{*prio*_{TX},*prio*_{RX}}. |
| ${t}_{y ′}^{SL}$ | | - the SCI format received in subframe ${t}_{m}^{SL}$ or the same SCI format 1 which is assumed to be received in subframe(s) ${t}_{m + q \times {P}_{step} \times {P}_{rsvp _ RX}}^{SL}$ determines according to 14.1.1.4C the set of resource blocks and subframes which overlaps with ${R}_{x , y + j \times {P}_{rsvp _ TX}^{′}}$ for *q*=1, 2, ..., *Q* and *j*=0, 1, ..., *Cᵣₑₛₑₗ-*1*.* Here, $Q = \frac{1}{{P}_{rsvp _ RX}}$ if P_{rsvp_RX} < 1 and *y'-m* ≤ *Pₛₜₑₚ* × *P_{rsvp_RX} + Pₛₜₑₚ*, where is the last subframe of the *Y* subframes , and Q = 1 otherwise. |
| | 6) If the number of candidate single-subframe resources remaining in the set *S_{A}* is smaller than 0.2 · *M*ₜₒₜₐₗ, then Step 4 is repeated with *Th_{a,b}* increased by 3 dB. | |
| | 7) For a candidate single-subframe resource *R*_{x,y} remaining in the set S *_{A}*, the metric *E*_{x,y} is defined as the linear average of S-RSSI measured in sub-channels *x+k* for *k* = 0,...,*L*_{subCH}-1 in the monitored subframes in Step 2 that can be expressed by ${t}_{y - {P}_{step} * j}^{SL}$ for a non-negative integer *j*. | |
| | 8) The UE moves the candidate single-subframe resource *R*_{x,y} with the smallest metric *E*_{x,y} from the set *S_{A}* to *S_{B}*. This step is repeated until the number of candidate single-subframe resources in the set S _{B} becomes greater than or equal to 0.2·*M*ₜₒₜₐₗ. | |
| | 9) When the UE is configured by upper layers to transmit using resource pools on multiple carriers, it shall exclude a candidate single-subframe resource *R*_{x,y} from *S_{B}* if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10]. | |
| The UE shall report set *S_{B}* to higher layers. | | |

**[Table 13]**

| | |
|---|---|
| If transmission based on random selection is configured by upper layers and when the UE is configured by upper layers to transmit using resource pools on multiple carriers, the following steps are used: | |
| | 1) A candidate single-subframe resource for PSSCH transmission *R*_{x,y} is defined as a set of *L*_{subCH} contiguous sub-channels with sub-channel *x+j* in subframe ${t}_{y}^{SL}$ where *j* = 0,...,*L*_{subCH}-1. The UE shall assume that any set of *L*_{*s*ubCH} contiguous sub-channels included in the corresponding PSSCH resource pool (described in 14.1.5) within the time interval [*n+T*₁,*n+T*₂] corresponds to one candidate single-subframe resource, where selections of *T*₁ and *T*₂ are up to UE implementations under *T*₁≤4 and *T₂ₘᵢₙ*(*prio_{TX}*)≤*T*₂≤100 , if *T₂ₘᵢₙ*(*prio_{TX}*) is provided by higher layers for *prio_{TX}*, otherwise 20≤*T*₂≤100. UE selection of *T*₂ shall fulfil the latency requirement. The total number of the candidate single-subframe resources is denoted by *M*ₜₒₜₐₗ. |
| | 2) The set *S_{A}* is initialized to the union of all the candidate single-subframe resources. The set *S_{B}* is initialized to an empty set. |
| | 3) The UE moves the candidate single-subframe resource *R*_{x,y} from the set *S_{A}* to *S_{B}*. |
| | 4) The UE shall exclude a candidate single-subframe resource *R*_{x,y} from *S_{B}* if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10]. |
| The UE shall report set *S_{B}* to higher layers. | |

**[Table 14]**

| | | |
|---|---|---|
| | | UE procedure for determining the subset of resources to be reported to higher layers in PSSCH resource selection in sidelink resource allocation mode 2 |
| In resource allocation mode 2, the higher layer can request the UE to determine a subset of resources from which the higher layer will select resources for PSSCH/PSCCH transmission. To trigger this procedure, in slot *n*, the higher layer provides the following parameters for this PSSCH/PSCCH transmission: | | |
| | - the resource pool from which the resources are to be reported; | |
| | - L1 priority, *prio_{TX};* | |
| | - the remaining packet delay budget; | |
| | - the number of sub-channels to be used for the PSSCH/PSCCH transmission in a slot, L_{subCH}; | |
| | - optionally, the resource reservation interval, *P*_{rsvp_TX}, in units of msec. | |
| | - if the higher layer requests the UE to determine a subset of resources from which the higher layer will select resources for PSSCH/PSCCH transmission as part of re-evaluation or pre-emption procedure, the higher layer provides a set of resources (*r*₀, *r*₁, *r*₂, ...) which may be subject to re-evaluation and a set of resources $\left({r}_{0}^{′},{r}_{1}^{′},{r}_{2}^{′},…\right)$ which may be subject to pre-emption. | |
| | | - it is up to UE implementation to determine the subset of resources as requested by higher layers before or after the slot ${r}_{i}^{"} - {T}_{3}$, where ${r}_{i}^{"}$ is the slot with the smallest slot index among (*r*₀, *r*₁, *r*₂, ...) and $\left({r}_{0}^{′},{r}_{1}^{′},{r}_{2}^{′},…\right)$, and T₃ is equal to ${T}_{proc , 1}^{SL}$*,* where ${T}_{proc , 1}^{SL}$ is defined in slots in Table 4.1.4-2 where *µ_{SL}* is the SCS configuration of the SL BWP. |
| The following higher layer parameters affect this procedure: | | |
| | - *sl-SelectionWindowList:* internal parameter *T*_{2*min*} is set to the corresponding value from higher layer parameter *sl-SelectionWindowList* for the given value of *prio_{TX}.* | |
| | - *sl-Thres-RSRP-List:* this higher layer parameter provides an RSRP threshold for each combination (*pᵢ, pⱼ*), where *pᵢ* is the value of the priority field in a received SCI format 1-A and *pⱼ* is the priority of the transmission of the UE selecting resources; for a given invocation of this procedure, *p*ⱼ = *prio_{TX}.* | |
| | - *sl-RS-ForSensing* selects if the UE uses the PSSCH-RSRP or PSCCH-RSRP measurement, as defined in clause 8.4.2.1. | |
| | - *sl-ResourceReservePeriodList* | |
| | - *sl-SensingWindow:* internal parameter *T*₀ is defined as the number of slots corresponding to *sl-SensingWindow* msec | |
| | - *sl-TxPercentageList:* internal parameter *X* for a given *prio_{TX}* is defined as *sl-TxPercentageList* (*prio_{TX}*) converted from percentage to ratio | |
| | - *sl-PreemptionEnable:* if *sl-PreemptionEnable* is provided, and if it is not equal to 'enabled', internal parameter *prioₚᵣₑ* is set to the higher layer provided parameter *sl-PreemptionEnable* | |
| The resource reservation interval, *P*_{rsvp_TX}, if provided, is converted from units of msec to units of logical slots, resulting in ${P}_{rsvp_TX}^{′}$ according to clause 8.1.7. | | |
| Notation: | | |
| $\left(t{′}_{0}^{SL},t{′}_{1}^{SL},t{′}_{2}^{SL},…\right)$ denotes the set of slots which belongs to the sidelink resource pool and is defined in Clause 8. | | |
| The following steps are used: | | |
| | 1) A candidate single-slot resource for transmission *R*_{x,y} is defined as a set of L_{subCH} contiguous sub-channels with sub-channel *x+j* in slot $t {′}_{y}^{SL}$ where *j* = 0,..., L_{subCH} - 1. The UE shall assume that any | |
| | | set of L_{subCH} contiguous sub-channels included in the corresponding resource pool within the time interval [*n + T*₁, *n + T*₂] correspond to one candidate single-slot resource, where |
| | | - selection of T₁ is up to UE implementation under $0 \leq {T}_{1} \leq {T}_{proc , 1}^{SL}$, where ${T}_{proc , 1}^{SL}$ is defined in slots in Table 4.1.4-2 where *µ_{SL}* is the SCS configuration of the SL BWP; |
| | | - if *T*_{2*min*} is shorter than the remaining packet delay budget (in slots) then T₂ is up to UE implementation subject to *T*_{2*min*} ≤ T₂ ≤ remaining packet delay budget (in slots); otherwise T₂ is set to the remaining packet delay budget (in slots). |
| | | The total number of candidate single-slot resources is denoted by *M*ₜₒₜₐₗ. |
| | 2) The sensing window is defined by the range of slots $\left[n-{T}_{0},n-{T}_{proc , 0}^{SL}\right)$ where *T*₀ is defined above and ${T}_{proc , 0}^{SL}$ is defined in slots in Table 4.1.4-1 where *µ_{SL}* is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots. | |
| | 3) The internal parameter *Th*(*pᵢ,pⱼ*) is set to the corresponding value of RSRP threshold indicated by the i-th field in *sl-Thres-RSRP-List,* where *i = pᵢ +* (*pⱼ -* 1) * 8. | |

**[Table 15]**

| | | |
|---|---|---|
| 4) The set *S_{A}* is initialized to the set of all the candidate single-slot resources. | | |
| 5) The UE shall exclude any candidate single-slot resource *R*_{x,y} from the set *S_{A}* if it meets all the following conditions: | | |
| | - the UE has not monitored slot $t {′}_{m}^{SL}$ in Step 2. | |
| | - for any periodicity value allowed by the higher layer parameter *sl-ResourceReservePeriodList* and a hypothetical SCI format 1-A received in slot $t {′}_{m}^{SL}$ *with 'Resource reservation period* field set to that periodicity value and indicating all subchannels of the resource pool in this slot, condition c in step 6 would be met. | |
| 5a) If the number of candidate single-slot resources *R*_{x,y} remaining in the set *S_{A}* is smaller than *X* · *Mₜₒₜₐₗ,* the set *S_{A}* is initialized to the set of all the candidate single-slot resources as in step 4. | | |
| 6) The UE shall exclude any candidate single-slot resource *R*_{x,y} from the set *S_{A}* if it meets all the following conditions: | | |
| | a) the UE receives an SCI format 1-A in slot $t {′}_{m}^{SL}$, and *'Resource reservation period'* field, if present, and *'Priority'* field in the received SCI format 1-A indicate the values *P*_{rsvp_RX} and *prio_{RX},* respectively according to Clause 16.4 in [6, TS 38.213]; | |
| | b) the RSRP measurement performed, according to clause 8.4.2.1 for the received SCI format 1-A, is higher than *Th*(*prio_{RX},prio_{TX}*); | |
| | c) the SCI format received in slot $t {′}_{m}^{SL}$ or the same SCI format which, if and only if the *'Resource reservation period* field is present in the received SCI format 1-A, is assumed to be received in slot(s) $t {′}_{m + q \times {P}_{rsvp _ RX}^{′}}^{SL}$ determines according to clause 8.1.5 the set of resource blocks and slots which overlaps with ${R}_{x , y + j \times {P}_{rsvp _ TX}^{′}}$ for *q=*1, 2, ..., *Q* and *j*=0, 1, ..., *Cᵣₑₛₑₗ -* 1. Here, ${P}_{rsvp _ RX}^{′}$ is *P*_{rsvp_RX} converted to units of logical slots according to clause 8.1.7, $Q = \left⌈\frac{{T}_{scal}}{{P}_{rsvp _ RX}}\right⌉$ if *P_{rsvp_RX} < T_{scal}* and $n ′ - m \leq {P}_{rsvp _ RX}^{′}$, where $t {′}_{n ′}^{SL} = n$ if slot *n* belongs to the set $\left(t{′}_{0}^{SL},t{′}_{1}^{SL},…,t{′}_{T {′}_{max} - 1}^{SL}\right)$ *,* otherwise slot $t {′}_{n ′}^{SL}$ is the first slot after slot *n* belonging to the set $\left(t{′}_{0}^{SL},t{′}_{1}^{SL},…,t{′}_{T {′}_{max} - 1}^{SL}\right)$ ; otherwise Q = 1. *T_{scal}* is set to selection window size *T*₂ converted to units of msec. | |
| | 7) If the number of candidate single-slot resources remaining in the set *S_{A}* is smaller than *X · M*ₜₒₜₐₗ, then *Th*(*pᵢ, pⱼ*) is increased by 3 dB for each priority value *Th*(*pᵢ, pⱼ*) and the procedure continues with step 4. | |
| The UE shall report set *S_{A}* to higher layers. | | |
| If a resource *rᵢ* from the set (*r₀,r₁,r₂*, ...) is not a member of *S_{A}*, then the UE shall report re-evaluation of the resource *rᵢ* to higher layers. | | |
| If a resource ${r}_{i}^{′}$ from the set $\left({r}_{0}^{′},{r}_{1}^{′},{r}_{2}^{′},…\right)$ meets the conditions below then the UE shall report pre-emption of the resource ${r}_{i}^{′}$ to higher layers | | |
| | - ${r}_{i}^{′}$ is not a member of S_{A}, and | |
| | - ${r}_{i}^{′}$ meets the conditions for exclusion in step 6, with *Th*(*prio_{RX}, prio_{TX}*) set to the final threshold after executing steps 1)-7), i.e. including all necessary increments for reaching *X* · *M*ₜₒₜₐₗ, and | |
| | - the associated priority *prio_{RX},* satisfies one of the following conditions: | |
| | | - *sl-PreemptionEnable* is provided and is equal to 'enabled' and *prio_{TX} > prio_{RX}* |
| | | - *sl-PreemptionEnable* is provided and is not equal to 'enabled', and *prio_{RX} < prioₚᵣₑ* and *prio_{TX} > prio_{RX}* |

For example, Table 16 may represent T^SL_proc,0 according to SCS.

**[Table 16]**

| **µ_{SL}** | ${T}_{proc , 0}^{SL}$ **[slots]** |
|---|---|
| 0 | 1 |
| 1 | 1 |
| 2 | 2 |
| 3 | 4 |

For example, Table 17 may represent T^SL_proc,l according to SCS.

**[Table 17]**

| ***µ_{SL}*** | ${T}_{proc , 1}^{SL}$ **[slots]** |
|---|---|
| 0 | 3 |
| 1 | 5 |
| 2 | 9 |
| 3 | 17 |

**[Table 18]**

| |
|---|
| *- NR-DL-PRS-AssistanceData* |
| The IE *NR-DL-PRS-AssistanceData* is used by the location server to provide DL-PRS assistance data. |
| NOTE 1: The location server should include at least one TRP for which the SFN can be obtained by the target device, e.g. the serving TRP. |
| NOTE 2: The *nr-DL-PRS-ReferenceInfo* defines the "assistance data reference" TRP whose DL-PRS configuration is included in *nr-DL-PRS⁻AssistanceDataList.* The *nr-DL-PRS-SFN0-Offset's* and *nr-DL-PRS-expectedRSTD's* in *nr-DL-PRS-AssistanceDataList* are provided relative to the "assistance data reference" TRP. |
| NOTE 3: The network signals a value of zero for the *nr-DL-PRS-SFN0-Offset, nr-DL-PRS-expectedRSTD,* and *nr-DL-PRS-expectedRSTD-uncertainty* of the "assistance data reference" TRP in *nr-DL-PRS-AssistanceDataList.* |
| NOTE 4: For NR DL-TDOA positioning (see clause 6.5.10) the *nr-DL-PRS-ReferenceInfo* defines also the requested "RSTD reference". |
| For DL-PRS processing, the LPP layer may inform lower layers to start performing DL-PRS measurements and provide to lower layers the information about the location of DL-PRS, e.g. DL-PRS-PointA, DL-PRS Positioning occasion information. |
| -- ASN1START |
| NR-DL-PRS-AssistanceData-r16 ::= SEQUENCE { |
| nr-DL-PRS-Referencelnfo-r16 DL-PRS-ID-Info-r16, |
| nr-DL-PRS-AssistanceDataList-r16 SEQUENCE (SIZE (1..nrMaxFreqLayers-r16)) OF |
| NR-DL-PRS-AssistanceDataPerFreq-r16, |
| nr-SSB-Config-r16 SEQUENCE (SIZE (1..nrMaxTRPs-r16)) OF |
| NR-SSB-Config-r16 OPTIONAL, -- Need ON |
| *... **3GPP*** |
| 3GPP TS 37.355 V16.7.0 (2021-12) 60 Release 16 |
| } |
| NR-DL-PRS-AssistanceDataPerFreq-r16 ::= SEQUENCE { |
| nr-DL-PRS-PositioningFrequencyLayer-r16 |
| NR-DL-PRS-PositioningFrequencyLayer-r16, |
| nr-DL-PRS-AssistanceDataPerFreq-r16 SEQUENCE (SIZE (1..nrMaxTRPsPerFreq-r16)) OF |
| NR-DL-PRS-AssistanceDataPerTRP-r16, |
| |
| } |
| NR-DL-PRS-AssistanceDataPerTRP-r16 ::= SEQUENCE { |
| dl-PRS-ID-r16 INTEGER (0..255), |
| nr-PhysCellID-r16 NR-PhysCellID-r16 OPTIONAL, -- Need ON |
| nr-CellGloballD-r16 NCGI-r15 OPTIONAL, -- Need ON |
| nr-ARFCN-r16 ARFCN-ValueNR-r15 OPTIONAL, -- Need ON |
| nr-DL-PRS-SFN0-Offset-r16 NR-DL-PRS-SFN0-Offset-r16, |
| nr-DL-PRS-ExpectedRSTD-r16 INTEGER (-3841..3841), |
| nr-DL-PRS-ExpectedRSTD-Uncertainty-r16 |
| INTEGER (0..246), |
| nr-DL-PRS-Info-r16 NR-DL-PRS-Info-r16, |
| ..., |
| [[ |
| prs-OnlyTP-r16 ENUMERATED { true } OPTIONAL -- Need ON |
| ]] |
| } |
| NR-DL-PRS-PositioningFrequencyLayer-r16 ::= SEQUENCE { |
| dl-PRS-SubcarrierSpacing-r16 ENUMERATED {kHz15, kHz30, kHz60, kHz120, ...}, |
| dl-PRS-ResourceBandwidth-r16 INTEGER (1..63), |
| dl-PRS-StartPRB-r16 INTEGER (0..2176), |
| dl-PRS-PointA-r16 ARFCN-ValueNR-r15, |
| dl-PRS-CombSizeN-r16 ENUMERATED {n2, n4, n6, n12, ...}, |
| dl-PRS-CyclicPrefix-r16 ENUMERATED {normal, extended, ...}, |
| |
| } |
| NR-DL-PRS-SFN0-Offset-r16 ::= SEQUENCE { |
| sfn-Offset-r 16 INTEGER (0..1023), |
| integerSubframeOffset-r16 INTEGER (0..9), |
| ...} |

**[Table 19]**

| |
|---|
| ***NR-DL-PRS-AssistanceData* field descriptions** |
| ***nr-DL-PRS-ReferenceInfo*** |
| This field specifies the IDs of the assistance data reference TRP. |
| ***nr-DL-PRS-AssistanceDataList*** |
| This field specifies the DL-PRS resources for each frequency layer. |
| ***nr-SSB-Config*** |
| This field specifies the SSB configuration of the TRPs. |
| ***nr-DL-PRS-PositioningFrequencyLayer*** |
| This field specifies the Positioning Frequency Layer for the *nr-DL-PRS-AssistanceDataPerFreq* field. |
| ***nr-DL-PRS-AssistanceDataPer Freq*** |
| This field specifies the DL-PRS Resources for the TRPs within the Positioning Frequency Layer. |
| ***dl-PRS-ID*** |
| This field is used along with a DL-PRS Resource Set ID and a DL-PRS Resource ID to uniquely identify a DL-PRS Resource, and is associated with a single TRP. |
| ***nr-PhysCellID*** |
| This field specifies the physical cell identity of the TRP. When the field *prs-OnlyTP* is included, this field is not included. |
| ***nr-CellGlobalID*** |
| This field specifies the NCGI, the globally unique identity of a cell in NR, as defined in TS 38.331 [35]. |
| When the field *prs-OnlyTP* is included, this field is not included. |
| ***nr-ARFCN*** |
| This field specifies the NR-ARFCN of the TRP's CD-SSB (as defined in TS 38.300 [47]) corresponding to *nr-PhysCellID.* When the field *prs-OnlyTP* is included, this field is not included. |
| *- NR-DL-PRS-Info* |
| The IE *NR-DL-PRS-Info* defines downlink PRS configuration. |
| -- ASN1START |
| NR-DL-PRS-Info-r16 ::= SEQUENCE { |
| nr-DL-PRS-ResourceSetList-r16 SEQUENCE (SIZE (1..nrMaxSetsPerTrpPerFreqLayer-r16)) OF |
| NR-DL-PRS-ResourceSet-r16, |
| ... |
| } |
| NR-DL-PRS-ResourceSet-r16 ::= SEQUENCE { |
| nr-DL-PRS-ResourceSetID-r16 NR-DL-PRS-ResourceSetID-r16, |
| dl-PRS-Periodicity-and-ResourceSetSlotOffset-r16 |
| NR-DL-PRS-Periodicity-and-ResourceSetSlotOffset-r16, |
| dl-PRS-ResourceRepetitionFactor-r16 ENUMERATED {n2, n4, n6, n8, n16, n32, ...} |
| OPTIONAL, -- Need OP |
| dl-PRS-ResourceTimeGap-r16 ENUMERATED {s1, s2, s4, s8, s16, s32, ...} |
| OPTIONAL, -- Cond Rep |
| dl-PRS-NumSymbols-r16 ENUMERATED {n2, n4, n6, n12, ...}, |
| dl-PRS-MutingOption1-r16 DL-PRS-MutingOption1-r16 OPTIONAL, -- Need OP |
| dl-PRS-MutingOption2-r16 DL-PRS-MutingOption2-r16 OPTIONAL, -- Need OP |
| dl-PRS-ResourcePower-r16 INTEGER (-60..50), |
| dl-PRS-ResourceList-r16 SEQUENCE (SIZE (1..nrMaxResourcesPerSet-r16)) OF |
| NR-DL-PRS-Resource-r16, |
| .. |
| } |
| DL-PRS-MutingOption1-r16 ::= SEQUENCE { |
| dl-prs-MutingBitRepetitionFactor-r16 |
| ENUMERATED { n1, n2, n4, n8, ... } OPTIONAL, -- Need OP |
| nr-option1-muting-r16 NR-MutingPattern-r16, |
| .. |
| } |
| DL-PRS-MutingOption2-r16 ::= SEQUENCE { |
| nr-option2-muting-r16 NR-MutingPattern-r16, |
| .. |
| } |
| NR-MutingPattern-r16 ::= CHOICE { |
| po2-r16 BIT STRING (SIZE(2)), |
| po4-r16 BIT STRING (SIZE(4)), |
| po6-r16 BIT STRING (SIZE(6)), |
| po8-r16 BIT STRING (SIZE(8)), |
| po16-r16 BIT STRING (SIZE(16)), |
| po32-r16 BIT STRING (SIZE(32)), |
| ... |
| } |

**[Table 20]**

| |
|---|
| NR-DL-PRS-Resource-r16 ::= SEQUENCE { |
| nr-DL-PRS-ResourceID-r16 NR-DL-PRS-ResourceID-r16, |
| dl-PRS-SequenceID-r16 INTEGER (0.. 4095), |
| dl-PRS-CombSizeN-AndReOffset-r16 CHOICE { |
| n2-r16 INTEGER (0..1), |
| n4-r16 INTEGER (0..3), |
| n6-r16 INTEGER (0..5), |
| n12-r16 INTEGER (0..11), |
| ... |
| }, |
| dl-PRS-ResourceSlotOffset-r16 INTEGER (0..nrMaxResourceOffsetValue-1-r16), |
| dl-PRS-ResourceSymbolOffset-r16 INTEGER (0..12), |
| dl-PRS-QCL-Info-r16 DL-PRS-QCL-Info-r16 OPTIONAL, --Need ON |
| .. |
| } |
| DL-PRS-QCL-Info-r16 ::= CHOICE { |
| ssb-r16 SEQUENCE { |
| pci-r16 NR-PhysCellID-r16, |
| ssb-Index-r16 INTEGER (0..63), |
| rs-Type-r16 ENUMERATED {typeC, typeD, typeC-plus-typeD} |
| }, |
| dl-PRS-r16 SEQUENCE { |
| qcl-DL-PRS-ResourceID-r16 NR-DL-PRS-ResourceID-r16, |
| qcl-DL-PRS-ResourceSetID-r16 NR-DL-PRS-ResourceSetID-r16 |
| } |
| } |
| NR-DL-PRS-Periodicity-and-ResourceSetSlotOffset-r16 ::= CHOICE { |
| scs15-r16 CHOICE { |
| n4-r16 INTEGER (0..3), |
| n5-r16 INTEGER (0..4), |
| n8-r16 INTEGER (0..7), |
| n10-r16 INTEGER (0..9), |
| n16-r16 INTEGER (0..15), |
| n20-r16 INTEGER (0..19), |
| n32-r16 INTEGER (0..31), |
| n40-r16 INTEGER (0..39), |
| n64-r16 INTEGER (0..63), |
| n80-r16 INTEGER (0..79), |
| n160-r16 INTEGER (0..159), |
| n320-r16 INTEGER (0..319), |
| n640-r16 INTEGER (0..639), |
| n1280-r16 INTEGER (0..1279), |
| n2560-r16 INTEGER (0..2559), |
| n5120-r16 INTEGER (0..5119), |
| n10240-r16 INTEGER (0..10239), |
| .. |
| }, |
| scs30-r16 CHOICE { |
| n8-r16 INTEGER (0..7), |
| n10-r16 INTEGER (0..9), |
| n16-r16 INTEGER (0..15), |
| n20-r16 INTEGER (0..19), |
| n32-r16 INTEGER (0..31), |
| n40-r16 INTEGER (0..39), |
| n64-r16 INTEGER (0..63), |
| n80-r16 INTEGER (0..79), |
| n128-r16 INTEGER (0..127), |
| n160-r16 INTEGER (0..159), |
| n320-r16 INTEGER (0..319), |
| n640-r16 INTEGER (0..639), |
| n1280-r16 INTEGER (0..1279), |
| n2560-r16 INTEGER (0..2559), |
| n5120-r16 INTEGER (0..5119), |
| n10240-r16 INTEGER (0..10239), |
| n20480-r16 INTEGER (0..20479), |
| ... |
| }, |

**[Table 21]**

| |
|---|
| ses60-r16 CHOICE { |
| n16-r16 INTEGER (0..15), |
| n20-r16 INTEGER (0..19), |
| n32-r16 INTEGER (0..31), |
| n40-r16 INTEGER (0..39), |
| n64-r16 INTEGER (0..63), |
| n80-r16 INTEGER (0..79), |
| n128-r16 INTEGER (0..127), |
| n160-r16 INTEGER (0..159), |
| n256-r16 INTEGER (0..255), |
| n320-r16 INTEGER (0..319), |
| n640-r16 INTEGER (0..639), |
| n1280-r16 INTEGER (0..1279), |
| n2560-r16 INTEGER (0..2559), |
| n5120-r16 INTEGER (0..5119), |
| n10240-r16 INTEGER (0..10239), |
| n20480-r16 INTEGER (0..20479), |
| n40960-r16 INTEGER (0..40959), |
| ... |
| }, |
| scs120-r16 CHOICE { |
| n32-r16 INTEGER (0..31), |
| n40-r16 INTEGER (0..39), |
| n64-r16 INTEGER (0..63), |
| n80-r16 INTEGER (0..79), |
| n128-r16 INTEGER (0..127), |
| n160-r16 INTEGER (0..159), |
| n256-r16 INTEGER (0..255), |
| n320-r16 INTEGER (0..319), |
| n512-r16 INTEGER (0..511), |
| n640-r16 INTEGER (0..639), |
| n1280-r16 INTEGER (0..1279), |
| n2560-r16 INTEGER (0..2559), |
| n5120-r16 INTEGER (0..5119), |
| n10240-r16 INTEGER (0..10239), |
| n20480-r16 INTEGER (0..20479), |
| n40960-r16 INTEGER (0..40959), |
| n81920-r16 INTEGER (0..81919), |
| ... |
| }, |
| ... |
| } |
| -- ASNISTOP |

**[Table 22]**

| ***NR-DL-PRS-Info* field descriptions** |
|---|
| ***nr-DL-PRS-ResourceSetID*** |
| This field specifies the DL-PRS Resource Set ID, which is used to identify the DL-PRS Resource Set of the TRP across all the frequency layers. |
| ***dl-PRS-Periodicity-and-ResourceSetSlotOffset*** |
| This field specifies the periodicity of DL-PRS allocation in slots configured per DL-PRS Resource Set and the slot offset with respect to SFN #0 slot #0 for a TRP where the DL-PRS Resource Set is configured (i.e. slot where the first DL-PRS Resource of DL-PRS Resource Set occurs). |
| ***dl-PRS-ResourceRepetitionFactor*** |
| This field specifies how many times each DL-PRS Resource is repeated for a single instance of the DL-PRS Resource Set. It is applied to all resources of the DL-PRS Resource Set. Enumerated values *n2, n4, n6, n8, n16, n32* correspond to 2, 4, 6, 8, 16, 32 resource repetitions, respectively. If this field is absent, the value for *dl-PRS-ResourceRepetitionFactor* is 1 (i.e., no resource repetition). |
| ***dl-PRS-ResourceTimeGap*** |
| This field specifies the offset in units of slots between two repeated instances of a DL-PRS Resource corresponding to the same DL-PRS Resource ID within a single instance of the DL-PRS Resource Set. The time duration spanned by one DL-PRS Resource Set containing repeated DL-PRS Resources should not exceed DL-PRS-Periodicity. |
| ***dl-PRS-NumSymbols*** |
| This field specifies the number of symbols per DL-PRS Resource within a slot. |
| ***dl-PRS-MutingOption1*** |
| This field specifies the DL-PRS muting configuration of the TRP for the Option-1 muting, as specified in TS 38.214 [45], and comprises the following sub-fields: |
| *- **dl-prs-MutingBitRepetitionFactor*** indicates the number of consecutive instances of the DL-PRS Resource Set corresponding to a single bit of the *nr-option1-muting* bit map. Enumerated values *n1, n2, n4, n8* correspond to 1, 2, 4, 8 consecutive instances, respectively. If this sub-field is absent, the value for *dl-prs-MutingBitRepetitionFactor* is *n1.* |
| *- **nr-option1-muting*** defines a bitmap of the time locations where the DL-PRS Resource is transmitted (value '1') or not (value '0') for a DL-PRS Resource Set, as specified in TS 38.214 [45]. |
| If this field is absent, Option-1 muting is not in use for the TRP. |
| ***dl-PRS-MutingOption2*** |
| This field specifies the DL-PRS muting configuration of the TRP for the Option-2 muting, as specified in TS 38.214 [45], and comprises the following sub-fields: |
| *- **nr-option2-muting*** defines a bitmap of the time locations where the DL-PRS Resource is transmitted (value '1') or not (value '0'). Each bit of the bitmap corresponds to a single repetition of the DL-PRS Resource within an instance of a DL-PRS Resource Set, as specified in TS 38.214 [45]. The size of this bitmap should be the same as the value for *dl-PRS-ResourceRepetitionFactor.* |
| If this field is absent, Option-2 muting is not in use for the TRP. |
| ***dl-PRS-ResourcePower*** |
| This field specifies the average EPRE of the resources elements that carry the PRS in dBm that is used for PRS transmission. The UE assumes constant EPRE is used for all REs of a given DL-PRS resource. |
| ***dl-PRS-SequenceID*** |
| This field specifies the sequence Id used to initialize cinit value used in pseudo random generator TS 38.211 [41], clause 5.2.1 for generation of DL-PRS sequence for transmission on a given DL-PRS Resource. |
| ***dl-PRS-CombSizeN-AndReOffset*** |
| This field specifies the Resource Element spacing in each symbol of the DL-PRS Resource and the Resource Element (RE) offset in the frequency domain for the first symbol in a DL-PRS Resource. All DL-PRS Resource Sets belonging to the same Positioning Frequency Layer have the same value of comb size. The relative RE offsets of following symbols are defined relative to the RE Offset in the frequency domain of the first symbol in the DL-PRS Resource according to TS 38.211 [41]. The comb size configuration should be aligned with the comb size configuration for the frequency layer. |
| ***dl-PRS-ResourceSlotOffset*** |
| This field specifies the starting slot of the DL-PRS Resource with respect to the corresponding DL-PRS-Resource Set Slot Offset. |
| ***dl-PRS-ResourceSymbolOffset*** |
| This field specifies the starting symbol of the DL-PRS Resource within a slot determined by *dl-PRS-ResourceSlotOffset.* |
| ***dl-PRS-QCL-Info*** |
| This field specifies the QCL indication with other DL reference signals for serving and neighbouring cells and comprises the following subfields: |
| *- ssb* indicates the SSB information for QCL source and comprises the following sub-fields: |
| *- pci* specifies the physical cell ID of the cell with the SSB that is configured as the source reference signal for the DL-PRS. The UE obtains the SSB configuration for the SSB configured as source reference signal for the DL-PRS by indexing to the field *nr-SSB-Config* with this physical cell identity. |
| *- **ssb-Index*** indicates the index for the SSB configured as the source reference signal for the DL-PRS. |
| *- **rs-Type*** indicates the QCL type. |
| *- **dl-PRS*** indicates the PRS information for QCL source reference signal and comprises the followings sub-fields: |
| *- **qcl-DL-PRS-ResourceID*** specifies DL-PRS Resource ID of the DL-PRS resource used as the source reference signal. |
| *- **qcl-DL-PRS-ResourceSetID*** indicates the DL-PRS Resource Set ID of the DL-PRS Resource Set used as the source reference signal. |

**[Table 23]**

| | | |
|---|---|---|
| 4 Channel access procedure | | |
| 4.0 General | | |
| Unless otherwise noted, the definitions below are applicable for the following terminologies used in this specification: | | |
| | - A channel refers to a carrier or a part of a carrier consisting of a contiguous set of resource blocks (RBs) on which a channel access procedure is performed in shared spectrum. | |
| | - A channel access procedure is a procedure based on sensing that evaluates the availability of a channel for performing transmissions. The basic unit for sensing is a sensing slot with a duration *Tₛₗ* = 9us. The sensing slot duration *Tₛₗ* is considered to be idle if an eNB/gNB or a UE senses the channel during the sensing slot duration, and determines that the detected power for at least 4us within the sensing slot duration is less than energy detection threshold *X*_{Thresh}. Otherwise, the sensing slot duration *Tₛₗ* is considered to be busy. | |
| | - *A channel occupancy* refers to transmission(s) on channel(s) by eNB/gNB/UE(s) after performing the corresponding channel access procedures in this clause. | |
| | - *A Channel Occupancy Time* refers to the total time for which eNB/gNB/UE and any eNB/gNB/UE(s) sharing the channel occupancy perform transmission(s) on a channel after an eNB/gNB/UE performs the corresponding channel access procedures described in this clause. For determining a *Channel Occupancy Time,* if a transmission gap is less than or equal to 25us, the gap duration is counted in the channel occupancy time. A channel occupancy time can be shared for transmission between an eNB/gNB and the corresponding UE(s). | |
| | - A *DL transmission burst* is defined as a set of transmissions from an eNB/gNB without any gaps greater than 16us. Transmissions from an eNB/gNB separated by a gap of more than 16us are considered as separate DL transmission bursts. An eNB/gNB can transmit transmission(s) after a gap within a *DL transmission burst* without sensing the corresponding channel(s) for availability. | |
| | - A *UL transmission burst* is defined as a set of transmissions from a UE without any gaps greater than 16us. Transmissions from a UE separated by a gap of more than 16 us are considered as separate UL transmission bursts. A UE can transmit transmission(s) after a gap within a *UL transmission burst* without sensing the corresponding channel(s) for availability. | |
| | - A *discovery burst* refers to a DL transmission burst including a set of signal(s) and/or channel(s) confined within a window and associated with a duty cycle. The *discovery burst* can be any of the following: | |
| | | - Transmission(s) initiated by an eNB that includes a primary synchronization signal (PSS), secondary synchronization signal (SSS) and cell-specific reference signal(s)(CRS) and may include non-zero power CSI reference signals (CSI-RS). |
| - Transmission(s) initiated by a gNB that includes at least an SS/PBCH block consisting of a primary synchronization signal (PSS), secondary synchronization signal (SSS), physical broadcast chan nel (PBCH) with associated demodulation reference signal (DM-RS) and may also include CORESET for PDCCH scheduling PDSCH with SIB1, and PDSCH carrying SIB1 and/or non-zero power CSI re ference signals (CSI-RS). | | |

**[Table 24]**

| | |
|---|---|
| 4.1 Downlink channel access procedures | |
| An eNB operating LAA Scell(s) on channel(s) and a gNB performing transmission(s) on channel(s) shall perform the channel access procedures described in this clause for accessing the channel(s) on which the transmission(s) are performed. | |
| In this clause, *X_{Thresh}* for sensing is adjusted as described in clause 4.1.5 when applicable. | |
| A gNB performs channel access procedures in this clause unless the higher layer parameter *ChannelAccessMode-r16* is provided and *ChannelAccessMode-r16 ='semistatic'.* | |
| 4.1.1 Type 1 DL channel access procedures | |
| This clause describes channel access procedures to be performed by an eNB/gNB where the time duration spanned by the sensing slots that are sensed to be idle before a downlink transmission(s) is random. The clause is applicable to the following transmissions: | |
| | - Transmission(s) initiated by an eNB including PDSCH/PDCCH/EPDCCH, or |
| | - Any transmission(s) initiated by a gNB. |
| The eNB/gNB may transmit a transmission after first sensing the channel to be idle during the sensing slot durations of a defer duration *T_{d}* and after the counter *N* is zero in step 4. The counter *N* is adjusted by sensing the channel for additional sensing slot duration(s) according to the steps below: | |
| | 1) set *N = Nᵢₙᵢₜ,* where *Nᵢₙᵢₜ* is a random number uniformly distributed between 0 and *CWₚ,* and go to step 4; |
| | 2) if *N* > 0 and the eNB/gNB chooses to decrement the counter, set *N = N -* 1; |
| | 3) sense the channel for an additional sensing slot duration, and if the additional sensing slot duration is idle, go to step 4; else, go to step 5; |
| | 4) if *N* = 0, stop; else, go to step 2. |
| | 5) sense the channel until either a busy sensing slot is detected within an additional defer duration *T_{d}* or all the sensing slots of the additional defer duration *T_{d}* are detected to be idle; |
| | 6) if the channel is sensed to be idle during all the sensing slot durations of the additional defer duration T_{d}, go to step 4; else, go to step 5; |
| If an eNB/gNB has not transmitted a transmission after step 4 in the procedure above, the eNB/gNB may transmit a transmission on the channel, if the channel is sensed to be idle at least in a sensing slot duration *Tₛₗ* when the eNB/gNB is ready to transmit and if the channel has been sensed to be idle during all the sensing slot durations of a defer duration *T_{d}* immediately before this transmission. If the channel has not been sensed to be idle in a sensing slot duration *Tₛₗ* when the eNB/gNB first senses the channel after it is ready to transmit or if the channel has been sensed to be not idle during any of the sensing slot durations of a defer duration *T_{d}* immediately before this intended transmission, the eNB/gNB proceeds to step 1 after sensing the channel to be idle during the sensing slot durations of a defer duration *T_{d}.* | |
| The defer duration *T_{d}* consists of duration *T_{f} =* 16us immediately followed by *mₚ* consecutive sensing slot durations *Tₛₗ,* and *T_{f}* includes an idle sensing slot duration *Tₛₗ* at start of *T_{f}.* | |
| *CW_{min, p}* ≤ *CWₚ* ≤ *CW_{max, p}* is the contention window. *CWₚ* adjustment is described in clause 4.1.4. *CW_{min, p}* and *CW_{max, p}* are chosen before step 1 of the procedure above. | |
| *mₚ, CW_{min, p},* and *CW_{max, p}* are based on a channel access priority class *p* associated with the eNB/gNB transmission, as shown in Table 4.1.1-1. | |
| An eNB/gNB shall not transmit on a channel for a *Channel Occupancy Time* that exceeds *T_{m cot, p}* where the channel access procedures are performed based on a channel access priority class *p* associated with the eNB/gNB transmissions, as given in Table 4.1.1-1. | |
| If an eNB/gNB transmits discovery burst(s) as described in clause 4.1.2 when *N* > 0 in the procedure above, the eNB/gNB shall not decrement *N* during the sensing slot duration(s) overlapping with discovery burst(s). | |
| A gNB may use any channel access priority class for performing the procedures above to transmit transmission(s) including discovery burst(s) satisfying the conditions described in this clause. | |
| A gNB shall use a channel access priority class applicable to the unicast user plane data multiplexed in PDSCH for performing the procedures above to transmit transmission(s) including unicast PDSCH with user plane data. | |
| For *p* = 3 and = 4 , if the absence of any other technology sharing the channel can be guaranteed on a long term basis (e.g. by level of regulation), *T_{m cot, p} =* 10*ms*, otherwise, *T_{m cot, p}* = 8*ms.* | |

For example, Table 25 may represent channel access priority class (CAPC).

**[Table 25]**

| **Channel Access Priority Class (*p*)** | ***mₚ*** | **CW_{*min*, *p*}** | ***CW_{max, p}*** | ***T_{m cot, p}*** | **allowed *CWₚ* sizes** |
|---|---|---|---|---|---|
| 1 | 1 | 3 | 7 | 2ms | {3,7} |
| 2 | 1 | 7 | 15 | 3ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

**[Table 26]**

| | |
|---|---|
| 4.1.1.1 Regional limitations on channel occupancy time | |
| In Japan, if an eNB/gNB has transmitted a transmission after *N* = 0 in step 4 of the procedure above, the eNB/gNB may transmit the next continuous transmission, for duration of maximum *Tⱼ =* 4*ms*, immediately after sensing the channel to be idle for at least a sensing interval of *Tⱼₛ* = 34*us* and if the total sensing and transmission time is not more than $1000 ⋅ {T}_{mcot} + \left⌈\frac{{T}_{mcot}}{{T}_{j}}-1\right⌉ ⋅ {T}_{js} us$*.* The sensing interval *Tⱼₛ* consists of duration *T_{f} =* 16*us* immediately followed by two sensing slots and *T_{f}* includes an idle sensing slot at start of *T_{f}.* The channel is considered to be idle for *Tⱼₛ* if it is sensed to be idle during the sensing slot durations of *T*ⱼₛ. | |
| 4.1.2 Type 2 DL channel access procedures | |
| This clause describes channel access procedures to be performed by an eNB/gNB where the time duration spanned by sensing slots that are sensed to be idle before a downlink transmission(s) is deterministic. | |
| If an eNB performs Type 2 DL channel access procedures, it follows the procedures described in clause 4.1.2.1. Type 2A channel access procedures as described in clause 4.1.2.1 are only applicable to the following transmission(s) performed by an eNB/gNB: | |
| | - Transmission(s) initiated by an eNB including discovery burst and not including PDSCH where the transmission(s) duration is at most 1*ms*, or |
| | - Transmission(s) initiated by a gNB with only discovery burst or with discovery burst multiplexed with non-unicast information, where the transmission(s) duration is at most 1*ms*, and the discovery burst duty cycle is at most 1/20, or |
| | - Transmission(s) by an eNB/ gNB following transmission(s) by a UE after a gap of 25*us* in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16*us* or up to 16*us*, respectively, in a shared channel occupancy as described in clause 4.1.3. | |
| 4.1.2.1 Type 2A DL channel access procedures | |
| An eNB/gNB may transmit a DL transmission immediately after sensing the channel to be idle for at least a sensing interval *T*_{*short*_*dl*} = *25us. T_{short_dl}* consists of a duration *T_{f} =* 16us immediately followed by one sensing slot and *T_{f}* includes a sensing slot at start of *T_{f}.* The channel is considered to be idle for *T_{short_dl}* if both sensing slots of *T_{short_dl}* are sensed to be idle. | |
| 4.1.2.2 Type 2B DL channel access procedures | |
| A gNB may transmit a DL transmission immediately after sensing the channel to be idle within a duration of *T_{f} =* 16*us. T_{f}* includes a sensing slot that occurs within the last 9*us* of *T_{f}.* The channel is considered to be idle within the duration *T_{f}* if the channel is sensed to be idle for a total of at least 5*us* with at least 4*us* of sensing occurring in the sensing slot. | |
| 4.1.2.3 Type 2C DL channel access procedures | |
| When a gNB follows the procedures in this clause for transmission of a DL transmission, the gNB does not sense the channel before transmission of the DL transmission. The duration of the corresponding DL transmission is at most 584us. | |

**[Table 27]**

| | | |
|---|---|---|
| Power control | | |
| 16.2.0 S-SS/PSBCH blocks | | |
| A UE determines a power *P*_{S-SSB}(*i*) for an S-SS/PSBCH block transmission occasion in slot *i* on active SL BWP *b* of carrier *f* as | | |
| | | ${P}_{S - SSB} \left(i\right) = min \left({P}_{CMAX},{P}_{O , S - SSB}+10 {log}_{10}\left({2}^{μ}⋅{M}_{RB}^{S - SSB}\right)+{α}_{S - SSB}⋅PL\right) \left[dBm\right]$ |
| where | | |
| | - *P*_{CMAX} is defined in [8-1, TS 38.101-1] | |
| | - *P*_{O,S-SSB} is a value of *dl-P0-PSBCH* if provided; else, *P*_{S-SSB}(*i*) = P_{CMAX} | |
| | ⁻ α_{S-SSB} is a value of *dl-Alpha-PSBCH,* if provided; else, α_{S-SSB} = 1 | |
| | - *PL = PL_{b,f,c}*(*q_{d}*) when the active SL BWP is on a serving cell *c*, as described in clause 7.1.1 except that | |
| | | - the RS resource is the one the UE uses for determining a power of a PUSCH transmission scheduled by a DCI format 0_0 in serving cell *c* when the UE is configured to monitor PDCCH for detection of DCI format 0_0 in serving cell *c* |
| | | - the RS resource is the one corresponding to the SS/PBCH block the UE uses to obtain MIB when the UE is not configured to monitor PDCCH for detection of DCI format 0_0 in serving cell *c* |
| | - | ${M}_{RB}^{S - SSB} = 11$ is a number of resource blocks for a S-SS/PSBCH block transmission with SCS configuration *µ* |
| 16.2.1 PSSCH | | |
| A UE determines a power P_{PSSCH}(i) for a PSSCH transmission on a resource pool in symbols where a corresponding PSCCH is not transmitted in PSCCH-PSSCH transmission occasion *i* on active SL BWP *b* of carrier *f* as: | | |
| | | ${P}_{PSSCH} \left(i\right) = min \left({P}_{CMAX},{P}_{MAX , CBR},min\left({P}_{PSSCH , D}\left(i\right),{P}_{PSSCH , SL}\left(i\right)\right)\right) \left[dBm\right]$ |
| where | | |
| | - *P*_{CMAX} is defined in [8-1, TS 38.101-1] | |
| | - *P*_{MAX,CBR} is determined by a value of *sl-MaxTxPower* based on a priority level of the PSSCH transmission and a CBR range that includes a CBR measured in slot *i* - *N* [6, TS 38.214]; if *sl-MaxTxPower* is not provided, then *P*_{MAX,CBR} = *P*_{CMAX}; | |
| | - if *dl-P0-PSSCH-PSCCH* is provided | |
| | | ${P}_{PSSCH , D} \left(i\right) = {P}_{O , D} + 10 {log}_{10} \left({2}^{μ}⋅{M}_{RB}^{PSSCH}\left(i\right)\right) + {α}_{D} ⋅ {PL}_{D} \left[dBm\right]$ |

**[Table 28]**

| | | | | |
|---|---|---|---|---|
| - else | | | | |
| | ${P}_{PSSCH , D} \left(i\right) = min \left({P}_{CMAX}, {P}_{MAX , CBR}\right) \left[dBm\right]$ | | | |
| | where | | | |
| | | - *P_{O,D}* is a value of *dl-P0-PSSCH-PSCCH*if provided | | |
| | | - *α_{D}* is a value of *dl-Alpha-PSSCH-PSCCH,* if provided; else, *α_{D} =* 1 | | |
| | | - *PL_{D} = PL_{b,f,c}*(*q_{d}*) when the active SL BWP is on a serving cell *c*, as described in clause 7.1.1 except that | | |
| | | | - the RS resource is the one the UE uses for determining a power of a PUSCH transmission scheduled by a DCI format 0_0 in serving cell *c* when the UE is configured to monitor PDCCH for detection of DCI format 0_0 in serving cell *c* | |
| | | | | - the RS resource is the one corresponding to the SS/PBCH block the UE uses to obtain MIB when the UE is not configured to monitor PDCCH for detection of DCI format 0_0 in serving cell *c* |
| | | | - ${M}_{RB}^{PSSCH} \left(i\right)$ is a number of resource blocks for the PSSCH transmission occasion *i* and *µ* is a SCS configuration | |
| | - if *sl-P0-PSSCH-PSCCH* is provided and if a SCI format scheduling the PSSCH transmission includes a cast type indicator field indicating unicast or is SCI format 2-C | | | |
| | | ${P}_{PSSCH , SL} \left(i\right) = {P}_{O , SL} + 10 {log}_{10} \left({2}^{μ}⋅{M}_{RB}^{PSSCH}\left(i\right)\right) + {α}_{SL} ⋅ {PL}_{SL} \left[dBm\right]$ | | |
| | - else | | | |
| | | ${P}_{PSSCH , SL} \left(i\right) = min \left({P}_{CMAX},{P}_{PSSCH , D}\left(i\right)\right) \left[dBm\right]$ | | |
| | | where | | |
| | | | - *P_{O,SL}* is a value of *sl-P0-PSSCH-PSCCH,* if provided | |
| | | | - *α_{SL}* is a value of *sl-Alpha-PSSCH-PSCCH,* if provided; else, *α_{SL} =* 1 | |
| | | | - *PL_{SL} = referenceSignalPower - higher layer filtered RSRP,* where | |
| | | | | - *referenceSignalPower* is obtained from a PSSCH transmit power per RE summed over the antenna ports of the UE, higher layer filtered across PSSCH transmission occasions using a filter configuration provided by *sl-FilterCoefficient,* and |
| | | | | - *higher layer filtered RSRP* is a RSRP, as defined in [7, TS 38.215], that is reported to the UE from a UE receiving the PSCCH-PSSCH transmission and is obtained from a PSSCH DM-RS using a filter configuration provided by *sl-FilterCoefficient* |
| | | | - ${M}_{RB}^{PSSCH} \left(i\right)$ is a number of resource blocks for PSCCH-PSSCH transmission occasion *i* and *µ* is a SCS configuration | |
| The UE splits the power *P*_{PSSCH}(*i*) equally across the antenna ports on which the UE transmits the PSSCH with non-zero power. | | | | |
| A UE determines a power P_{PSSCH2} (*i*) for a PSSCH transmission on a resource pool in the symbols where a corresponding PSCCH is transmitted in PSCCH-PSSCH transmission occasion *i* on active SL BWP *b* of carrier *f* as | | | | |
| ${P}_{PSSCH 2} \left(i\right) = 10 {log}_{10} \left(\frac{{M}_{RB}^{PSSCH} \left(i\right) - {M}_{RB}^{PSCCH} \left(i\right)}{{M}_{RB}^{PSSCH} \left(i\right)}\right) + {P}_{PSSCH} \left(i\right) \left[dBm\right]$ | | | | |
| where ${M}_{RB}^{PSCCH} \left(i\right)$ is a number of resource blocks for the corresponding PSCCH transmission in PSCCH-PSSCH transmission occasion *i*. | | | | |
| The UE splits the power P_{PSSCH2} (*i*) equally across the antenna ports on which the UE transmits the PSSCH with non-zero power. | | | | |
| 16.2.2 PSCCH | | | | |
| A UE determines a power *P*_{PSCCH}(*i*) for a PSCCH transmission on a resource pool in PSCCH-PSSCH transmission occasion *i* as | | | | |
| ${P}_{PSCCH} \left(i\right) = 10 {log}_{10} \left(\frac{{M}_{RB}^{PSCCH} \left(i\right)}{{M}_{RB}^{PSSCH} \left(i\right)}\right) + {P}_{PSSCH} \left(i\right) \left[dBm\right]$ | | | | |
| where | | | | |
| | ⁻ *P*_{PSSCH}(*i*) is specified in clause 16.2.1 | | | |
| | - ${M}_{RB}^{PSCCH} \left(i\right)$ is a number of resource blocks for the PSCCH transmission in PSCCH-PSSCH transmission occasion *i* | | | |
| | - ${M}_{RB}^{PSSCH} \left(i\right)$ is a number of resource blocks for PSCCH-PSSCH transmission occasion *i* | | | |

**[Table 29]**

| | | | | | |
|---|---|---|---|---|---|
| 16.2.3 PSFCH | | | | | |
| A UE with *N*_{sch,Tx,PSFCH} scheduled PSFCH transmissions for HARQ-ACK information and conflict information, and capable of transmitting a maximum of *N*_{max,PSFCH} PSFCHs, determines a number *N*_{Tx,PSFCH} of simultaneous PSFCH transmissions and a power *P*_{PSFCH,k}(i) for a PSFCH transmission *k*, 1 ≤ *k* ≤ *N*_{Tx,PSFCH}, on a resource pool in PSFCH transmission occasion i on active SL BWP b of carrier *f* as | | | | | |
| | - if *dl-P0-PSFCH* is provided, | | | | |
| | | | | | ${P}_{PSFCH , one} = {P}_{O , PSFCH} + 10 {log}_{10} \left({2}^{μ}\right) + {α}_{PSFCH} ⋅ PL \left[dBm\right]$ |
| | | where | | | |
| | | - *P_{O,PSFCH}* is a value of *dl-P0-PSFCH* | | | |
| | | - *α_{PSFCH}* is a value of *dl-Alpha-PSFCH,* if provided; else, *α_{PFSCH}* = 1 | | | |
| | | | - *PL = PL_{b,f,c}*(*q_{d}*) when the active SL BWP is on a serving cell c, as described in clause 7.1.1 except that | | |
| | | | | - the RS resource is the one the UE uses for determining a power of a PUSCH transmission scheduled by a DCI format 0_0 in serving cell c when the UE is configured to monitor PDCCH for detection of DCI format 0_0 in serving cell c | |
| | | | | - the RS resource is the one corresponding to the SS/PBCH block the UE uses to obtain MIB when the UE is not configured to monitor PDCCH for detection of DCI format 0_0 in serving cell c | |
| | | - if *N*_{sch,Tx,PSFCH} ≤ *N*_{max,PSFCH} | | | |
| | | | - if P_{PSFCH,one} *+* 10log₁₀(*N*_{sch,Tx,PSFCH}) ≤ *P*_{CMAX}, where *P*_{CMAX} is determined for *N*_{sch,Tx,PSFCH} PSFCH transmissions according to [8-1, TS 38.101-1] | | |
| | | | | - *N*_{Tx,PSFCH} = *N*_{sch,Tx,PSFCH} and *P*_{PSFCH,k}(i) = *P*_{PSFCH,one} [dBm] | |
| | | | - else | | |
| | | | | - UE autonomously determines *N*_{Tx,PSFCH} PSFCH transmissions first with ascending order of corresponding priority field values as described in clause 16.2.4.2 over the PSFCH transmissions with HARQ-ACK information, if any, and then with ascending order of priority value over the PSFCH transmissions with conflict information, if any, such that ${N}_{TX , PSFCH} \geq max \left(1, {\sum }_{i = 1}^{K} {M}_{i}\right)$ where *Mᵢ*, for 1 ≤ *i* ≤ 8, is a number of PSFCHs with priority value i for PSFCH with HARQ-ACK information and *Mᵢ*, for i > 8, is a number of PSFCHs with priority value i - 8 for PSFCH with conflict information and K is defined as | |
| | | | | | - the largest value satisfying ${P}_{PSFCH , one} + 10 {log}_{10} \left(max\left(1, {\sum }_{i = 1}^{K} {M}_{i}\right)\right) \leq {P}_{CMAX}$ where P_{CMAX} is determined according to [8-1, TS 38.101-1] for transmission of all PSFCHs in ${\sum }_{i = 1}^{K} {M}_{i}$, if any |
| | | | | | - zero, otherwise |
| | | | | | and |
| | | | | | ${P}_{PSFCH , k} \left(i\right) = min \left({P}_{CMAX}-10{log}_{10}\left({N}_{Tx , PSFCH}\right),{P}_{PSFCH , one}\right) \left[dBm\right]$ |
| | | | | | where *P*_{CMAX} is defined in [8-1, TS 38.101-1] and is determined for the *N*_{Tx,PSFCH} PSFCH transmissions |

**[Table 30]**

| | | | |
|---|---|---|---|
| - else | | | |
| | - the UE autonomously selects *N*_{max,PSFCH} PSFCH transmissions with ascending order of corresponding priority field values as described in clause 16.2.4.2 | | |
| | - if *P*_{PSFCH,one} *+* 10*log*₁₀ (*N*_{max,PSFCH}) ≤ P_{CMAX}, where *P*_{CMAX} is determined for the *N*_{max,PSFCH} PSFCH transmissions according to [8-1, TS 38.101-1] | | |
| | | - *N*_{Tx,PSFCH} = *N*_{max,PSFCH} and *P*_{PSFCH,k}(i) = *P*_{PSFCH,one} [dBm] | |
| | - else | | |
| | | - the UE autonomously selects *N*_{Tx,PSFCH} PSFCH transmissions in ascending order of corresponding priority field values as described in clause 16.2.4.2 over the PSFCH transmissions with HARQ-ACK information, if any, and then with ascending order of priority value over the PSFCH transmissions with conflict information, if any, such that ${N}_{Tx , PSFCH} \geq max \left(1, {\sum }_{i = 1}^{K} {M}_{i}\right)$ where *Mᵢ*, 1 ≤ *i* ≤ 8, is a number of PSFCHs with priority value i for PSFCH with HARQ-ACK information and *Mᵢ, i >* 8, is a number of PSFCHs with priority value i - 8 for PSFCH with conflict information and K is defined as | |
| | | | - the largest value satisfying ${P}_{PSFCH , one} + 10 {log}_{10} \left(max\left(1, {\sum }_{i = 1}^{K} {M}_{i}\right)\right) \leq {P}_{CMAX}$ where P_{CMAX} is determined according to [8-1, TS 38.101-1] for transmission of all PSFCHs in ${\sum }_{i = 1}^{K} {M}_{i}$, if any |
| | | | - zero, otherwise |
| | | | and |
| | | | ${P}_{PSFCH , k} \left(i\right) = min \left({P}_{CMAX}-10{log}_{10}\left({N}_{Tx , PSFCH}\right),{P}_{PSFCH , one}\right) \left[dBm\right]$ |
| | | | where P_{CMAX} is determined for the *N*_{Tx,PSFCH} simultaneous PSFCH transmissions according to [8-1, TS 38.101-1] |
| - else | | | |
| | | | ${P}_{PSFCH , k} \left(i\right) = {P}_{CMAX} - 10 {log}_{10} \left({N}_{Tx , PSFCH}\right) \left[dBm\right]$ |
| where the UE autonomously determines *N*_{Tx,PSFCH} PSFCH transmissions with ascending order of corresponding priority field values as described in clause 16.2.4.2 over the PSFCH transmissions with HARQ-ACK information, if any, and then with ascending order of priority value over the PSFCH transmissions with conflict information, if any, such that *N*_{Tx,PSFCH} ≥ 1 and where P_{CMAX} is determined for the *N*_{Tx,PSFCH} PSFCH transmissions according to [8-1, TS 38.101-1]. | | | |

Meanwhile, when radar operation or sensing is performed in the communication and sensing integrated system (e.g., JCAS; Joint Communication and Sensing), from a viewpoint of an entity that transmits a signal based on the communication and sensing integrated system (e.g., JCAS), an object existing in a non-line-of-sight (NLOS) region cannot be detected.

For example, in the present disclosure, an entity of a communication and sensing integrated system (e.g., JCAS) may refer to an entity that performs an operation under the communication and sensing integrated system (e.g., JCAS).

According to the present disclosure, a method for detecting an object existing in an NLOS region based on a signal transmitted by an entity of a communication and sensing integrated system (e.g., JCAS) and a reconfigurable intelligent surface (e.g., RIS) is proposed.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives an inter-UE physical control channel (e.g., PSCCH) (and/or inter-UE physical shared channel (e.g., PSSCH)) (re)transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) inter-UE physical shared channel (e.g., PSSCH) (and/or (NR or LTE) inter-UE physical control channel (e.g., PSCCH)) (and/or (NR or LTE) SL SSB (and/or UL channel/signal))". And, the methods proposed in the present disclosure may be used in combination with each other (in a new type of manner).

For example, the term "specific threshold" below may refer to a threshold value defined in advance or (pre-)configured by a higher layer (including an application layer) of a network, a base station, or a UE. Hereinafter, the term "specific configuration value" may refer to a value defined in advance or (pre-)configured by a higher layer (including an application layer) of a network, a base station, or a UE. Hereinafter, "configured by a network/base station" may mean an operation in which a base station configures (in advance) a UE by higher layer RRC signaling, configures/signals a UE through MAC CE, or signals a UE through DCI.

In the following disclosure, the following terms are used.
LMF - location management function
UE-triggered inter-UE positioning (e.g., sidelink (SL) positioning) - inter-UE positioning (e.g., SL positioning) where the procedure is triggered by UE
gNB/LMF-triggered inter-UE positioning (e.g., SL positioning) - inter-UE positioning (e.g., SL positioning) where the procedure is triggered by gNB/LMF
UE-controlled inter-UE positioning (e.g., SL positioning) - inter-UE positioning (e.g., SL positioning) where the inter-UE positioning (e.g., SL positioning) group is created by UE
gNB-controlled inter-UE positioning (e.g., SL positioning) - inter-UE positioning (e.g., SL positioning) where the inter-UE positioning (e.g., SL positioning) group is created by gNB
UE-based inter-UE positioning (e.g., SL positioning) - inter-UE positioning (e.g., SL positioning) where the UE position is calculated by UE
UE-assisted inter-UE positioning (e.g., SL positioning) - inter-UE positioning (e.g., SL positioning) where the UE position is calculated by gNB/LMF
inter-UE positioning (e.g., SL positioning) group - UEs that participates in inter-UE positioning (e.g., SL positioning)
Target UE (T-UE) - UE whose position is calculated
Server UE (S-UE) - UE that assists T-UE's positioning
Anchor UE - UE that assists T-UE's positioning
MG - measurement gap where only a reference signal (e.g., SL PRS) transmission is allowed
MW - measurement window where both SL data and reference signal (e.g., SL PRS) can be transmitted in a multiplexed way
SL PRS - sidelink positioning reference signal
CCH - control channel
IUC message - inter-UE coordination message. It is a message that a transmitting UE receives from another UE, including a receiving UE, and it may mean a message that includes information for a preferred resource set that is suitable for a transmitting UE to transmit to a receiving UE and/or a non-preferred resource set that is not suitable for the transmitting UE to transmit.
JCAS - Joint Communication and Sensing
RIS - Reconfigurable Intelligent Surface

According to an embodiment of the present disclosure, an inter-UE reference signal (e.g., SL PRS) transmission resource may be composed of an inter-UE reference signal (e.g., SL PRS) resource set composed of the following information. Or, for example, information related to inter-UE reference signal (e.g., SL PRS) transmission resources may include some or all of the following information.
1. inter-UE reference signal (e.g., SL PRS) resource set ID
2. inter-UE reference signal (e.g., SL PRS) resource ID list: an inter-UE reference signal (e.g., SL PRS) resource ID list in an inter-UE reference signal (e.g., SL PRS) resource set
3. inter-UE reference signal (e.g., SL PRS) resource type: it can be configured as periodic, aperiodic, semi-persistent, or on-demand.
4. Alpha value for inter-UE reference signal (e.g., SL PRS) power control
5. P0 value for inter-UE reference signal (e.g., SL PRS) power control
6. Pathloss reference for inter-UE reference signal (e.g., SL PRS) power control: it can be configured as SL synchronization signal block (SSB), downlink (DL) PRS, uplink (UL) sounding reference signal (SRS), SL SRS for positioning, inter-UE physical control channel demodulation reference signal (e.g., PSCCH DMRS), inter-UE physical shared channel demodulation reference signal (e.g., PSSCH DMRS), PSFCH, or SL CSI RS etc.

According to an embodiment of the present disclosure, an inter-UE reference signal (e.g., SL PRS) resource set may be composed of an inter-UE reference signal (e.g., SL PRS) resource composed of the following information. Or, for example, information related to the inter-UE reference signal (e.g., SL PRS) transmission resource may include some or all of the following information.
1. inter-UE reference signal (e.g., SL PRS) resource ID
2. inter-UE reference signal (e.g., SL PRS) comb size: an interval between REs at which an inter-UE reference signal (e.g., SL PRS) is transmitted within a symbol.
3. inter-UE reference signal (e.g., SL PRS) comb offset: an index of a RE at which an inter-UE reference signal (e.g., SL PRS) is initially transmitted within the first inter-UE reference signal (e.g., SL PRS) symbol.
4. inter-UE reference signal (e.g., SL PRS) comb cyclic shift: cyclic shift used to generate the sequence constituting the inter-UE reference signal (e.g., SL PRS).
5. inter-UE reference signal (e.g., SL PRS) start position: an index of the first symbol in which inter-UE reference signal (e.g., SL PRS) is transmitted within one slot.
6. inter-UE reference signal (e.g., SL PRS) #symbol: the number of symbols constituting inter-UE reference signal (e.g., SL PRS) within one slot
7. Frequency domain shift: position (of an index) of the lowest frequency at which inter-UE reference signal (e.g., SL PRS) is transmitted in the frequency domain
8. inter-UE reference signal (e.g., SL PRS) BW: Frequency Bandwidth Used for inter-UE reference signal (e.g., SL PRS) Transmission
9. inter-UE reference signal (e.g., SL PRS) resource type: it can be configured as periodic, aperiodic, semi-persistent, or on-demand.
10. inter-UE reference signal (e.g., SL PRS) periodicity: it is a period in the time domain between inter-UE reference signal (e.g., SL PRS) resources, and has a physical or logical slot unit of a resource pool in which the inter-UE reference signal (e.g., SL PRS) is transmitted.
11. inter-UE reference signal (e.g., SL PRS) offset: Reference timing Reference, an offset in the time domain to the start of the first inter-UE reference signal (e.g., SL PRS) resource, and it has units of physical or logical slots of resource pools in which inter-UE reference signals (e.g., SL PRSs) are transmitted. For example, the reference timing may be SFN = 0, DFN = 0, or a successful reception or decoding time of RRC/MAC CE/DCI/SCI related to the inter-UE reference signal (e.g., SL PRS) resource.
12. inter-UE reference signal (e.g., SL PRS) sequence ID
13. inter-UE reference signal (e.g., SL PRS) spatial relation: It can be configured to SL SSB, DL PRS, UL SRS, UL SRS for positioning, inter-UE physical control channel demodulation reference signal (e.g., PSCCH DMRS), inter-UE physical shared channel demodulation reference signal (e.g., PSSCH DMRS), PSFCH, or SL CSI RS.
14. inter-UE reference signal (e.g., SL PRS) CCH: inter-UE reference signal (e.g., SL PRS) control channel. For example, inter-UE reference signal (e.g., SL PRS) resource configuration information and resource location may be signaled through the inter-UE reference signal (e.g., SL PRS) CCH.

Referring to Equation 7, the power magnitude of a signal transmitted and received by a radar may have a characteristic that it attenuates in proportion to a fourth power of a distance to an object to be detected.${P}_{r} = \frac{{P}_{t} {G}_{t} {σA}_{er}}{{\left(4{πR}^{2}\right)}^{2}} = \frac{{P}_{t} {G}_{t} {G}_{r} {σλ}^{2}}{{\left(4π\right)}^{3} {R}^{4}}$

Here, for example, Pₜ may indicate transmit power (W), Pᵣ may indicate receive power (W), Gₜ may indicate transmit antenna gain, Gᵣ may indicate receive antenna gain, σ may indicate radar cross section, and Aₑᵣ may indicate effective aperture area of receive antenna.

For example, the transmit power of a radar/sensing signal for object detection transmitted based on a communication and sensing integrated system (e.g., JCAS) needs to be limited in consideration of interference with a communication signal. Therefore, unlike a general radar transmit signal, in a communication and sensing integrated system (e.g., JCAS), it may be inappropriate to transmit a radar/sensing signal for object detection with high transmit power to detect an object located at a long distance. In addition, since only a part of a signal incident on an object is reflected and received, receive signal power may be further attenuated, which may cause a problem that reception performance is degraded.

According to various embodiments of the present disclosure, in order to detect an object existing in an NLOS region, such as left and right roads covered by buildings at an urban intersection where LOS is not secured, an entity of a communication and sensing integrated system (e.g., JCAS) may detect the object existing in the NLOS region based on a reconfigurable intelligent surface (e.g., RIS) according to the following method.

According to an embodiment of the present disclosure, in order to detect an object existing in an NLOS region, a reconfigurable intelligent surface (e.g., RIS) that has received a radar/sensing signal (or a reference signal) transmitted by an entity of the communication and sensing integrated system (e.g., JCAS) for detecting the object may reflect the received radar/sensing signal to the region where LOS is not secured from the communication and sensing integrated system (e.g., JCAS) entity.

Subsequently, the reconfigurable intelligent surface (e.g., RIS) may receive a signal that is a reflected radar signal from an object to be detected, and the reconfigurable intelligent surface (e.g., RIS) may reflect the received signal again toward a direction of the entity of the communication and sensing integrated system (e.g., JCAS). Through this, finally, the entity of the communication and sensing integrated system (e.g., JCAS) may detect the object existing in the NLOS region.

According to an embodiment of the present disclosure, in order to detect an object in an NLOS region, an entity of the communication and sensing integrated system (e.g., JCAS) may transmit a radar/sensing signal (or a reference signal) to a reconfigurable intelligent surface (e.g., RIS), the radar/sensing signal may be reflected by the reconfigurable intelligent surface (e.g., RIS) and may reach the object, and the signal may be reflected again by the object, reflected again by the reconfigurable intelligent surface (e.g., RIS), and finally received by the entity of the communication and sensing integrated system (e.g., JCAS). In this case, transmit power of the signal transmitted from the entity of the communication and sensing integrated system (e.g., JCAS), reflected by the reconfigurable intelligent surface (e.g., RIS), reaching the object to be detected, reflected again by the object, and received by the entity of the communication and sensing integrated system (e.g., JCAS) through the reconfigurable intelligent surface (e.g., RIS) may be attenuated in proportion to an eighth power of a propagation distance of the finally transmitted signal, so that a problem of severely degraded detection performance for the object may occur.

To solve the above-described problem, when the reconfigurable intelligent surface (e.g., RIS) reflects the radar/sensing signal received from the entity of the communication and sensing integrated system (e.g., JCAS) toward the NLOS region, the reconfigurable intelligent surface (e.g., RIS) may obtain a beamforming gain by transmitting the radar/sensing signal toward the NLOS direction using all the reconfigurable intelligent surface (e.g., RIS) elements that constitute the reconfigurable intelligent surface (e.g., RIS) based on the incident angle at which the radar/sensing signal is received.

In addition, for example, when the reflected signal that is beamformed as described above and reflected by the detected object is incident again on the reconfigurable intelligent surface (e.g., RIS), and the reconfigurable intelligent surface (e.g., RIS) reflects the signal toward a direction of the entity of the communication and sensing integrated system (e.g., JCAS), a beamforming gain may be obtained by transmitting a signal toward the direction of the entity of the communication and sensing integrated system (e.g., JCAS) using all the reconfigurable intelligent surface (e.g., RIS) elements that constitute the reconfigurable intelligent surface (e.g., RIS). Based on such an operation, attenuation of the signal power according to the distance may be minimized, and detection performance for the object existing in the NLOS region may be improved.

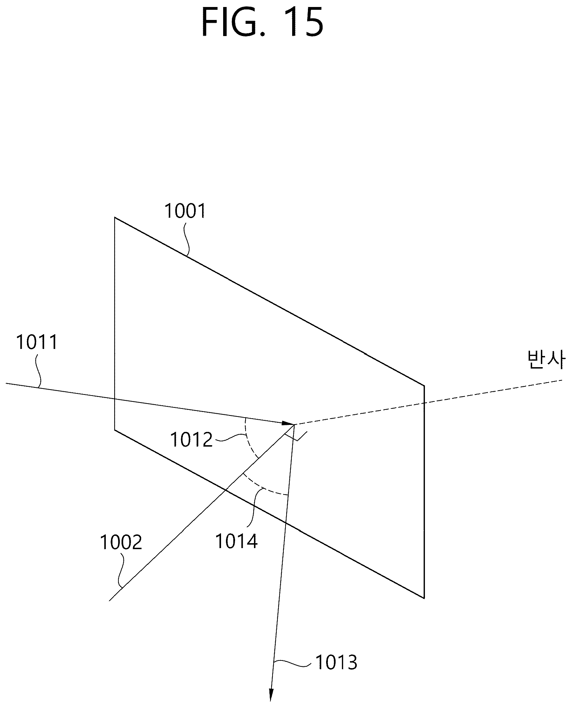

FIG. 15 shows a reconfigurable intelligent surface according to an embodiment of the present disclosure. The embodiment of FIG. 15 may be combined with various embodiments of the present disclosure.

Referring to FIG. 15, 1001 may represent the reconfigurable intelligent surface (e.g., RIS) described in the present disclosure, and 1002 may mean the perpendicular line to the reconfigurable intelligent surface (e.g., RIS). 1011 may represent the signal incident on the reconfigurable intelligent surface (e.g., RIS), and the signal may be incident on the reconfigurable intelligent surface (e.g., RIS) at the incident angle 1012. 1013 may mean the signal reflected from the reconfigurable intelligent surface (e.g., RIS), and the signal may be reflected from the reconfigurable intelligent surface (e.g., RIS) at the reflection angle 1014.

Here, according to various embodiments of the present disclosure, a difference value between the angle 1012 and the angle 1014 may be adjusted by the reconfigurable intelligent surface (e.g., RIS) (or by the controller of the reconfigurable intelligent surface (e.g., RIS)). In addition, when the reconfigurable intelligent surface (e.g., RIS) reflects the incident signal, it may boost power, perform a frequency shift by applying a frequency shift value, or perform modulation and reflection based on the specific code (or coding).

According to an embodiment of the present disclosure, an entity of a communication and sensing integrated system (e.g., JCAS) may transmit a radar/sensing signal (or a reference signal) to a reconfigurable intelligent surface (e.g., RIS) in order to detect an object in a NLOS region, and the radar/sensing signal may be reflected by the reconfigurable intelligent surface (e.g., RIS) to reach the object, the signal may then be reflected by the object, reflected again by the reconfigurable intelligent surface (e.g., RIS), and finally received by the communication and sensing integrated system (e.g., JCAS) entity. In this case, the reconfigurable intelligent surface (e.g., RIS) may feed back to the communication and sensing integrated system (e.g., JCAS) entity i) information for a reflection angle, which is obtained by reflecting the signal toward the NLOS region using beamforming with reference to an incident angle of the signal incident from the communication and sensing integrated system (e.g., JCAS) entity, and ii) information for a reflection angle, which is obtained by reflecting the signal toward the communication and sensing integrated system (e.g., JCAS) entity using beamforming with reference to an incident angle of the signal incident from an object detected in the NLOS region.

For example, in such a case, the communication and sensing integrated system (e.g., JCAS) entity may finally estimate a direction of a NLOS region in which an object is detected, based on two pieces of information for a reflection angle with reference to an incident angle, from a signal angle of a signal transmitted by the communication and sensing integrated system (e.g., JCAS) entity and a signal angle of a signal reflected from the reconfigurable intelligent surface (e.g., RIS).

According to an embodiment of the present disclosure, an entity of a communication and sensing integrated system (e.g., JCAS) may transmit a radar/sensing signal (or a reference signal) to a reconfigurable intelligent surface (e.g., RIS) in order to detect an object in a NLOS region, and the radar/sensing signal may be reflected by the reconfigurable intelligent surface (e.g., RIS) to reach the object, the signal may then be reflected by the object, reflected again by the reconfigurable intelligent surface (e.g., RIS), and finally received by the communication and sensing integrated system (e.g., JCAS) entity. In this case, in order for the communication and sensing integrated system (e.g., JCAS) entity to estimate an accurate direction of an object existing in the NLOS region, it may be necessary to know a distance between the communication and sensing integrated system (e.g., JCAS) entity and the reconfigurable intelligent surface (e.g., RIS). Based on the distance value, a final distance estimated by the communication and sensing integrated system (e.g., JCAS) entity from a signal reflected from the detected object, and two pieces of information for a reflection angle with reference to an incident angle, an accurate direction of the detected object existing in the NLOS region may be estimated.

For example, for the above purpose, a reconfigurable intelligent surface (e.g., RIS) (or a backscatter) may modulate a signal incident from the communication and sensing integrated system (e.g., JCAS) entity by using a specific code (or coding) that is (pre-)configured (in a resource pool), or may perform a frequency shift by using a specific frequency shift value that is (pre-)configured (in a resource pool), and may reflect the signal in the same direction as an incident angle of the signal incident from the communication and sensing integrated system (e.g., JCAS) entity. The communication and sensing integrated system (e.g., JCAS) entity may estimate a distance between itself and the reconfigurable intelligent surface (e.g., RIS) (or the backscatter) based on a signal reflected in the same direction as the incident angle (for example, based on a round-trip time (RTT) method), and, by using the distance and two pieces of information for an incident angle and a reflection angle, may finally estimate the direction/distance of an object existing in the NLOS region.

For example, in the present disclosure, 'reflection' may include an operation of directly reflecting an incident signal, reflecting the incident signal in a different direction by changing an incident angle, modulating the incident signal with a specific coding and reflecting it, or performing a frequency shift and reflecting it.

According to an embodiment of the present disclosure, for estimating the direction and the distance of a detected object existing in the NLOS region as described above, the communication and sensing integrated system (e.g., JCAS) entity may finally report to an entity that calculates the position of an object existing in the NLOS region (for example, a location management function, LMF or a server UE) two pieces of information for the reflection angle with reference to the incident angle received as feedback from the reconfigurable intelligent surface (e.g., RIS), and information for a distance estimation value between the communication and sensing integrated system (e.g., JCAS) entity and the reconfigurable intelligent surface (e.g., RIS).

According to various embodiments of the present disclosure, an efficient method for detecting an object existing in a NLOS region by minimizing a received signal power attenuation based on a reconfigurable intelligent surface (e.g., RIS) is proposed, in which a communication and sensing integrated system (e.g., JCAS) entity detects the object existing in the NLOS region.

Meanwhile, when radar/sensing is performed based on a communication and sensing integrated system (e.g., JCAS), the reception power of a signal transmitted by a communication and sensing integrated system (e.g., JCAS) entity (for example, a base station or a UE), reflected by an object to be detected, and received by the entity is attenuated in proportion to a fourth power of a distance between the entity and the object, which may cause a problem that a detection performance for the signal is degraded.

In the present disclosure, a method for improving a detection performance by minimizing a signal power attenuation of a signal transmitted by a communication and sensing integrated system (e.g., JCAS) entity according to a distance from an object may be proposed.

For example, in order to solve the above problem and minimize a signal power attenuation according to a distance from an object to be detected, a reconfigurable intelligent surface (e.g., RIS) or a backscatter may be attached to a surface of the object to be detected by using a signal transmitted by a communication and sensing integrated system (e.g., JCAS) entity. For example, the object to be detected may correspond to a large vehicle such as an automobile or a trailer, or a road structure such as a central divider, a roadside guard, a building wall, or a road surface, and a plurality of reconfigurable intelligent surfaces (e.g., RISs) or backscatters may be attached to the surface of the object.

In such a case, a signal transmitted by a communication and sensing integrated system (e.g., JCAS) entity may be incident on the reconfigurable intelligent surface (e.g., RIS) or the backscatter attached to a surface of the object, and the reconfigurable intelligent surface (e.g., RIS) or the backscatter may reflect the incident signal in the same direction as an incident angle of the signal, or within an angular range within a threshold from the incident angle. In such a case, the reconfigurable intelligent surface (e.g., RIS) or the backscatter may act as a passive element to directly reflect the incident signal power, or may perform reflection by boosting the power with partial compensation for the incident signal power attenuation while having a function of a slightly active element.

Based on the above operation, since all of a signal transmitted by the communication and sensing integrated system (e.g., JCAS) entity is reflected by the reconfigurable intelligent surface (e.g., RIS) or the backscatter at a reflection angle identical to an incident angle, a loss power of a received signal power detected by the communication and sensing integrated system (e.g., JCAS) entity may be minimized compared with a case where the reconfigurable intelligent surface (e.g., RIS) or the backscatter is not attached to an object, and, as a result, a performance for detecting the object may be improved.

In addition, when the reconfigurable intelligent surface (e.g., RIS) or the backscatter performs a role of a partially active element and reflects an incident signal while partially boosting an incident signal power, a received signal power received by the communication and sensing integrated system (e.g., JCAS) entity may be significantly enhanced, and, therefore, a range in which an object can be detected may dramatically increase.

According to an embodiment of the present disclosure, in the above case, when a reconfigurable intelligent surface (e.g., RIS) is attached to an object to be detected, the reconfigurable intelligent surface (e.g., RIS) may programmably adjust a reflection angle for reflection based on an incident angle. However, since a communication and sensing integrated system (e.g., JCAS) entity generally does not know in which direction a signal will be transmitted, when only a reflection angle according to a predetermined function depending on the incident angle is used, a signal may not be able to be reflected in the same direction as the incident direction, as described above.

According to various embodiments of the present disclosure, in order to solve the above problem, the reconfigurable intelligent surface (e.g., RIS) attached to an object to be detected may determine an angle of a reflected signal in the following manner based on an incident signal.

According to an embodiment of the present disclosure, a controller for adjusting a reflection angle based on an incident angle of a reconfigurable intelligent surface (e.g., RIS) may operate to change a function for a reflection angle determined by the incident angle over time, rather than determining the reflection angle only by the incident angle.

For example, the controller may control a surface material constituting the reconfigurable intelligent surface (e.g., RIS) to determine a reflection angle by adding a specific value to an incident angle. In this case, for example, θ_out may be θ_in *+* θ_gap, where θ_in may mean the incident angle, θ_out may mean the reflection angle, and θ_gap may mean a difference between the incident angle and the reflection angle. Here, for example, θ_gap may be (pre-)configured in a resource pool in which the communication and sensing integrated system (e.g., JCAS) entity transmits a signal.

For example, a controller of the reconfigurable intelligent surface (e.g., RIS) may control a reflection angle of the reconfigurable intelligent surface (e.g., RIS) so that a signal incident thereon is reflected at a reflection angle of 0 to 180 degrees (or within a half sphere) with reference to a control plane of the reconfigurable intelligent surface (e.g., RIS) according to time. Here, for example, θ_out may be modulo(θ_in *+* 180*t/T, 180 degrees). In this case, for example, t may mean a time index having a range of 0 to T-1, T may mean an integer constant, and modulo(x, 180 degrees) may mean a function that outputs an angle value that is a remainder when x is divided by 180 degrees.

For example, through the above-described operation of the reconfigurable intelligent surface (e.g., RIS), regardless of a direction from which a radar signal is incident from a communication and sensing integrated system (e.g., JCAS) entity, a signal reflected from the reconfigurable intelligent surface (e.g., RIS) may be reflected in a time-division multiplexing (TDM) format over time within a range of 0 to 180 degrees with reference to a surface of the reconfigurable intelligent surface (e.g., RIS). Accordingly, the communication and sensing integrated system (e.g., JCAS) entity may receive a signal in which attenuation of a received signal power is minimized as described above, and, as a result, a performance of object detection may be improved.

In the above case, for example, the reconfigurable intelligent surface (e.g., RIS) may modulate a signal reflected at each reflection angle by using a unique code (or coding) different for each reflection angle, or may shift a frequency of an input signal by using a unique frequency shift value different for each reflection angle. Based on this, a communication and sensing integrated system (e.g., JCAS) entity that receives a signal reflected in this manner may detect the received reflected signal and obtain the code (or coding) or the frequency shift value associated with the reflected signal. When the communication and sensing integrated system (e.g., JCAS) calculates a distance to the detected object based on a time distance between a time point at which a radar signal was transmitted and a time point at which the reflected signal was received, it may compensate for a time delay caused by the reconfigurable intelligent surface (e.g., RIS) linked to the code (or coding) or the frequency shift value. For the above operation, the communication and sensing integrated system (e.g., JCAS) entity may report the code (or coding) or the frequency shift value obtained from the received reflected signal to an entity (for example, an LMF or a server UE) that calculates a distance between the communication and sensing integrated system (e.g., JCAS) entity and the detected object.

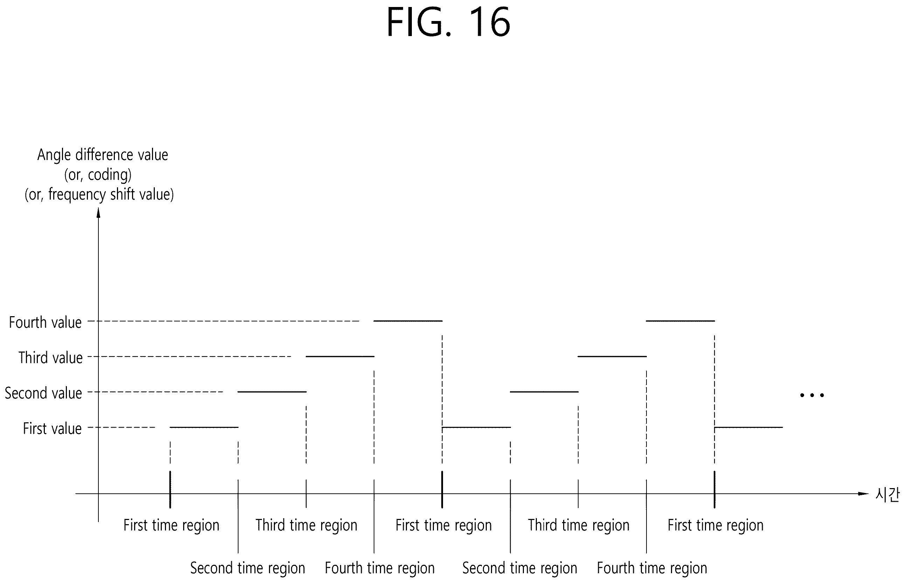

FIG. 16 shows values applied in a TDM manner when a reconfigurable intelligent surface reflects a signal incident thereon, according to an embodiment of the present disclosure. The embodiment of FIG. 16 may be combined with various embodiments of the present disclosure.

Referring to FIG. 16, a graph of values over time, in which a first time region to a fourth time region are repeated, is shown. For example, the values may be angle difference values, coding schemes, or frequency shift values.

For example, when a signal is received by the reconfigurable intelligent surface (e.g., RIS) in the first time region, the reconfigurable intelligent surface (e.g., RIS) may reflect the signal by applying an angle difference value according to the first value, or may reflect the signal by performing modulation according to a coding scheme corresponding to the first value, and/or may reflect the signal by performing a frequency shift using a frequency shift value according to the first value.

For example, when a signal is received by the reconfigurable intelligent surface (e.g., RIS) in the second time region, the reconfigurable intelligent surface (e.g., RIS) may reflect the signal by applying an angle difference value according to the second value, or may reflect the signal by performing modulation according to a coding scheme corresponding to the second value, or may reflect the signal by performing a frequency shift using a frequency shift value according to the second value.

For example, when a signal is received by the reconfigurable intelligent surface (e.g., RIS) in the third time region, the reconfigurable intelligent surface (e.g., RIS) may reflect the signal by applying an angle difference value according to the third value, or may reflect the signal by performing modulation according to a coding scheme corresponding to the third value, or may reflect the signal by performing a frequency shift using a frequency shift value according to the third value.

For example, when a signal is received by the reconfigurable intelligent surface (e.g., RIS) in the fourth time region, the reconfigurable intelligent surface (e.g., RIS) may reflect the signal by applying an angle difference value according to the fourth value, or may reflect the signal by performing modulation according to a coding scheme corresponding to the fourth value, or may reflect the signal by performing a frequency shift using a frequency shift value according to the fourth value.

For example, through the above-described method, a communication and sensing integrated system (e.g., JCAS) entity that receives a signal reflected by the reconfigurable intelligent surface (e.g., RIS) may derive an angle difference value applied to a signal received by itself based on the first to fourth values, and may perform positioning based on the angle difference value.

According to an embodiment of the present disclosure, when a reconfigurable intelligent surface (e.g., RIS) is composed of one or more reconfigurable intelligent surface (e.g., RIS) elements, all the reconfigurable intelligent surface (e.g., RIS) elements constituting the reconfigurable intelligent surface (e.g., RIS) may be divided into N groups, and each of the N groups may reflect an incident signal at a different angle with reference to a surface of each reconfigurable intelligent surface (e.g., RIS) as described above. As a result, the reconfigurable intelligent surface (e.g., RIS) may operate to reflect a signal over an entire range of reflection angles of 0 to 180 degrees (or within a half sphere). For example, θ_out may be modulo(θ_in + θ*n, 180 degrees), where n may mean an index of each of the N groups forming the N groups in a range of 0 to N-1, and θ may mean an angle obtained by dividing 180 by N.

For example, through the above-described operation, the reconfigurable intelligent surface (e.g., RIS) may simultaneously reflect an incident signal in all possible directions of reflection angles without a time delay, and a time delay taken for a communication and sensing integrated system (e.g., JCAS) entity to detect an object may be minimized.

In the above case, for example, the reconfigurable intelligent surface (e.g., RIS) may modulate a signal reflected at each reflection angle by using a unique code (or coding) different for each reflection angle, or may shift a frequency of an input signal by using a unique frequency shift value different for each reflection angle.

Based on this, a communication and sensing integrated system (e.g., JCAS) entity that has received a reflected signal may detect the received reflected signal and obtain a code (or coding) or a frequency shift value associated with the reflected signal. When the communication and sensing integrated system (e.g., JCAS) calculates a distance to a detected object based on a time distance between a time point at which it transmitted a signal and a time point at which the reflected signal was received, it may distinguish a reconfigurable intelligent surface (e.g., RIS) element that reflected the reflected signal based on the code (or coding) or the frequency shift value, and may accurately calculate a distance between itself and the reconfigurable intelligent surface (e.g., RIS) element that reflected the received signal among one or more reconfigurable intelligent surface (e.g., RIS) elements constituting the reconfigurable intelligent surface (e.g., RIS).

For the above operation, the communication and sensing integrated system (e.g., JCAS) entity may report a code (or coding) or a frequency shift value detected from a received reflected signal to an entity (for example, an LMF or a server UE) that calculates a distance between the communication and sensing integrated system (e.g., JCAS) entity and a detected object.

According to various embodiments of the present disclosure, a method for minimizing a power attenuation in a case where a signal transmitted by a communication and sensing integrated system (e.g., JCAS) entity for detecting an object is reflected and received again has been proposed based on a reconfigurable intelligent surface (e.g., RIS).

As a method for positioning of a UE, there may be GNSS, OTDOA, enhanced cell ID (E-CID), barometric sensor positioning, WLAN positioning, Bluetooth positioning, terrestrial beacon system (TBS), and UTDOA (Uplink Time Difference of Arrival). As a reference signal transmitted and received for positioning, an inter-UE reference signal (e.g., SL PRS) may be used. In addition, positioning based on a reconfigurable intelligent surface (RIS) may be possible, and the RIS may be a device that reflects a signal by applying a predetermined angle difference (reflection angle application) and performing predetermined coding on the incident signal. Meanwhile, in the related art, a radar system had a problem in that sensing was possible only for objects with a line of sight (LOS) secured, whereas positioning performed based on the RIS may solve the above problem.

According to an embodiment of the present disclosure, a reconfigurable intelligent surface (e.g., RIS) may reflect an incident signal by applying different reflection angles for each time region (e.g., slot) in a time-division multiplexing (e.g., TDM) manner. In addition, for example, the reflected signal may be modulated with an independent code or may be frequency-shifted, and a device that receives the reflected signal may obtain information for each reflection angle through this. Alternatively, for example, the RIS may be divided into N elements, and each of the elements may simultaneously reflect the incident signal by applying different reflection angles. For example, a device or an entity that has received a signal reflected from the RIS may obtain a code or a frequency shift value, and may report information for the code or the frequency shift value (to an LMF).

According to various embodiments of the present disclosure, by performing positioning based on a reconfigurable intelligent surface (e.g., RIS), sensing and detection operations may be possible even for objects located in positions where a line of sight (LOS) is not secured.

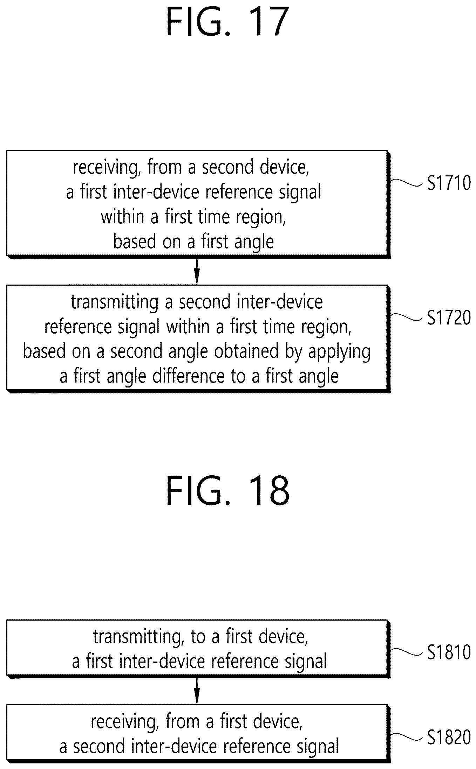

FIG. 17 shows a procedure in which a first device performs wireless communication according to an embodiment of the present disclosure. The embodiment of FIG. 17 may be combined with various embodiments of the present disclosure.

Referring to FIG. 17, in step S1710, a first device may receive, from a second device, a first inter-device reference signal within a first time region, based on a first angle. In step S1720, the first device may transmit a second inter-device reference signal within the first time region, based on a second angle obtained by applying a first angle difference to the first angle. For example, each of at least one angle difference including the first angle difference may be related to each of at least one time region including the first time region, and the at least one time region may be repeated.

For example, the second inter-device reference signal may be received to a third device based on a third angle, information for the first time region may be obtained by the third device based on the second inter-device reference signal, information for the first angle difference may be obtained by the third device based on the first time region, and the information for the first angle difference and information for the third angle may be reported to a fourth device.

For example, the third device may be the same as the second device.

For example, the fourth device may be a location management function, LMF.

For example, additionally, the first device may receive, from the second device, a third inter-device reference signal within a second time region, based on a fourth angle; and transmit a fourth inter-device reference signal within the second time region, based on a fifth angle obtained by applying a second angle difference to the fourth angle. For example, the second angle difference may be included in the at least one angle difference, the second time region may be included in the at least one time region, the fourth inter-device reference signal may be received to a fifth device based on a sixth angle, information for the second time region may be obtained by the fifth device based on the fourth inter-device reference signal, information for the second angle difference may be obtained by the fifth device based on the second time region, the information for the second angle difference and information for a sixth angle may be reported to the fourth device, and a positioning for the second device may be performed by the fourth device, based on the information for the first angle difference, the information for the second angle difference, the information for the third angle, and information for the fourth angle.

For example, the second inter-device reference signal may be a signal modulated based on a first coding, and each of at least one coding including the first coding may be related to each of the at least one time region.

For example, the second inter-device reference signal may be transmitted to a third device, information for the first time region may be obtained by the third device, based on the first coding, information for a distance value between the first device and the second device may be obtained by the third device, based on the first time region.

For example, the information for the distance value or information for the first coding may be reported to a fourth device.

For example, the second inter-device reference signal may be a signal obtained by applying a first frequency shift value, and each of at least one frequency shift value including the first frequency shift value may be related to each of the at least one time region.

For example, the second inter-device reference signal may be transmitted to a third device, information for the first time region may be obtained by the third device, based on the first frequency shift value, and information for a distance value between the first device and the second device may be obtained by the third device, based on the first time region.

For example, the information for the distance value or information for the first frequency shift value may be reported to a fourth device.

For example, the first device may be a reconfigurable intelligent surface, RIS.

For example, the second inter-device reference signal may be a signal reflected from the first inter-device reference signal.

The above-described embodiment may be applied to various devices described below. First, a processor 102 of a first device 100 may control a transceiver 106 to receive, from a second device 200, a first inter-device reference signal within a first time region, based on a first angle. And, the processor 102 of the first device 100 may control the transceiver 106 to transmit a second inter-device reference signal within the first time region, based on a second angle obtained by applying a first angle difference to the first angle. For example, each of at least one angle difference including the first angle difference may be related to each of at least one time region including the first time region, and the at least one time region may be repeated.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a first inter-device reference signal within a first time region, based on a first angle; and transmitting a second inter-device reference signal within the first time region, based on a second angle obtained by applying a first angle difference to the first angle, wherein each of at least one angle difference including the first angle difference may be related to each of at least one time region including the first time region, and wherein the at least one time region may be repeated.

For example, the second inter-device reference signal may be received to a third device based on a third angle, information for the first time region may be obtained by the third device based on the second inter-device reference signal, information for the first angle difference may be obtained by the third device based on the first time region, and the information for the first angle difference and information for the third angle may be reported to a fourth device.

For example, the third device may be the same as the second device.

For example, the fourth device may be a location management function, LMF.

For example, additionally, the instructions may further comprise: receiving, from the second device, a third inter-device reference signal within a second time region, based on a fourth angle; and transmitting a fourth inter-device reference signal within the second time region, based on a fifth angle obtained by applying a second angle difference to the fourth angle. For example, the second angle difference may be included in the at least one angle difference, the second time region may be included in the at least one time region, the fourth inter-device reference signal may be received to a fifth device based on a sixth angle, information for the second time region may be obtained by the fifth device based on the fourth inter-device reference signal, information for the second angle difference may be obtained by the fifth device based on the second time region, the information for the second angle difference and information for a sixth angle may be reported to the fourth device, and a positioning for the second device may be performed by the fourth device, based on the information for the first angle difference, the information for the second angle difference, the information for the third angle, and information for the fourth angle.

For example, the second inter-device reference signal may be a signal modulated based on a first coding, and each of at least one coding including the first coding may be related to each of the at least one time region.

For example, the second inter-device reference signal may be transmitted to a third device, information for the first time region may be obtained by the third device, based on the first coding, information for a distance value between the first device and the second device may be obtained by the third device, based on the first time region.

For example, the information for the distance value or information for the first coding may be reported to a fourth device.

For example, the second inter-device reference signal may be a signal obtained by applying a first frequency shift value, and each of at least one frequency shift value including the first frequency shift value may be related to each of the at least one time region.

For example, the second inter-device reference signal may be transmitted to a third device, information for the first time region may be obtained by the third device, based on the first frequency shift value, and information for a distance value between the first device and the second device may be obtained by the third device, based on the first time region.

For example, the information for the distance value or information for the first frequency shift value may be reported to a fourth device.

For example, the first device may be a reconfigurable intelligent surface, RIS.

For example, the second inter-device reference signal may be a signal reflected from the first inter-device reference signal.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, a first inter-UE reference signal within a first time region, based on a first angle; and transmitting a second inter-UE reference signal within the first time region, based on a second angle obtained by applying a first angle difference to the first angle, wherein each of at least one angle difference including the first angle difference may be related to each of at least one time region including the first time region, and wherein the at least one time region may be repeated.

According to an embodiment of the present disclosure, a non-transitory computer-readable storage medium storing instructions may be proposed. For example, the instructions, based on being executed, may cause a first device to: receive, from a second device, a first inter-device reference signal within a first time region, based on a first angle; and transmit a second inter-device reference signal within the first time region, based on a second angle obtained by applying a first angle difference to the first angle, wherein each of at least one angle difference including the first angle difference may be related to each of at least one time region including the first time region, and wherein the at least one time region may be repeated.

FIG. 18 shows a procedure in which a second device performs wireless communication according to an embodiment of the present disclosure. The embodiment of FIG. 18 may be combined with various embodiments of the present disclosure.

Referring to FIG. 18, in step S1810, a second device may transmit, to a first device, a first inter-device reference signal. In step S1820, the second device may receive, from the first device, a second inter-device reference signal. For example, the first inter-device reference signal may be received to the first device within a first time region, based on a first angle, the second inter-device reference signal may be transmitted from the first device within the first time region, based on a second angle obtained by applying a first angle difference to the first angle, and each of at least one angle difference including the first angle difference may be related to each of at least one time region including the first time region.

For example, the at least one time region may be repeated.

The above-described embodiment may be applied to various devices described below. First, a processor 202 of a second device 200 may control a transceiver 206 to transmit, to a first device 100, a first inter-device reference signal. And, the processor 202 of the second device 200 may control the transceiver 206 to receive, from the first device 100, a second inter-device reference signal. For example, the first inter-device reference signal may be received to the first device 100 within a first time region, based on a first angle, the second inter-device reference signal may be transmitted from the first device 100 within the first time region, based on a second angle obtained by applying a first angle difference to the first angle, and each of at least one angle difference including the first angle difference may be related to each of at least one time region including the first time region.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, a first inter-device reference signal; and receiving, from the first device, a second inter-device reference signal, wherein the first inter-device reference signal may be received to the first device within a first time region, based on a first angle, wherein the second inter-device reference signal may be transmitted from the first device within the first time region, based on a second angle obtained by applying a first angle difference to the first angle, and wherein each of at least one angle difference including the first angle difference may be related to each of at least one time region including the first time region.

For example, the at least one time region may be repeated.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

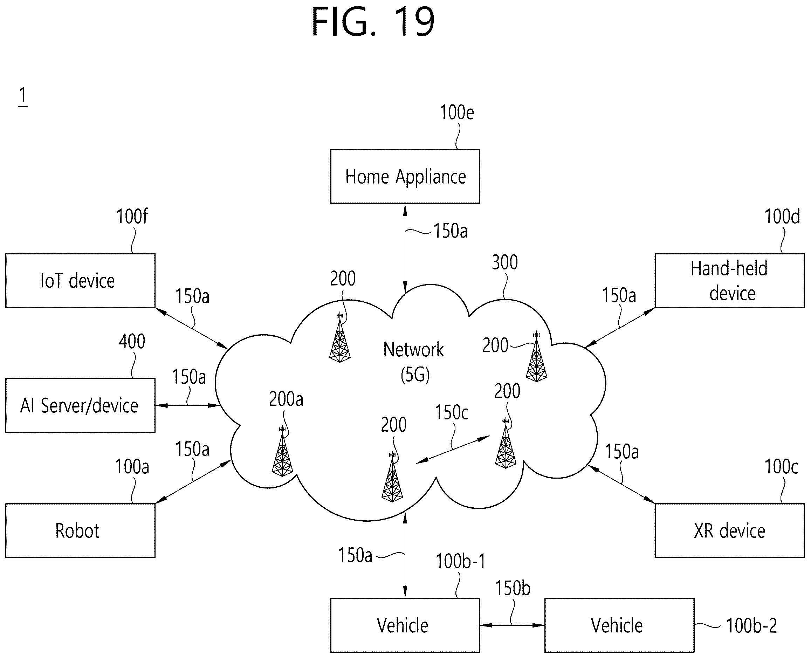

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

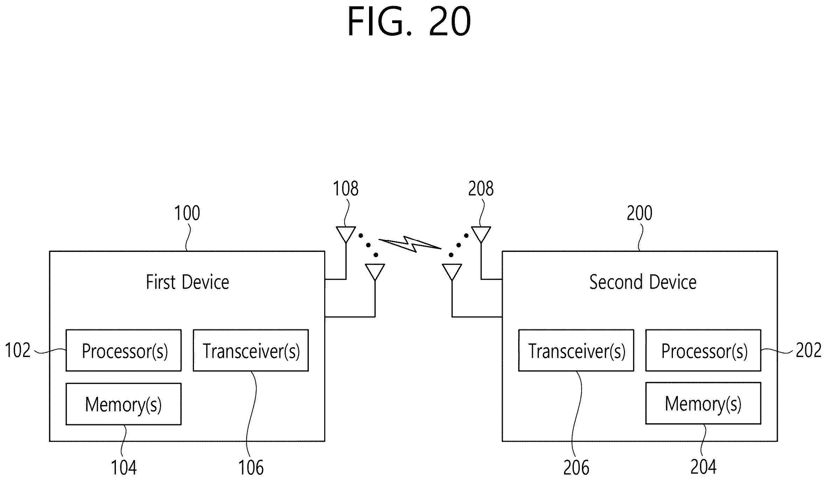

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

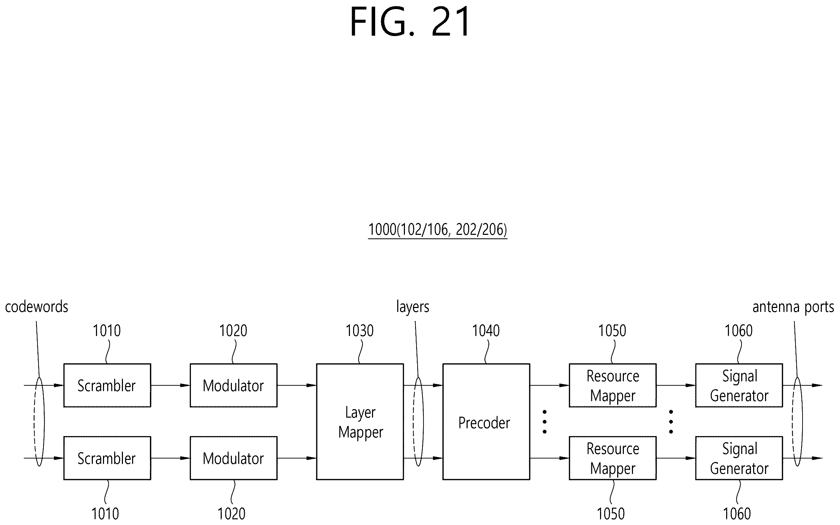

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

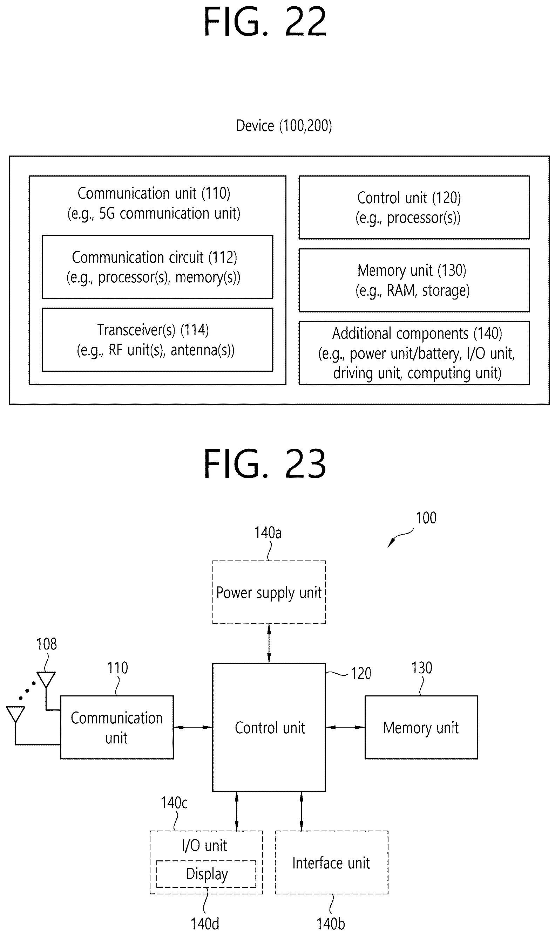

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

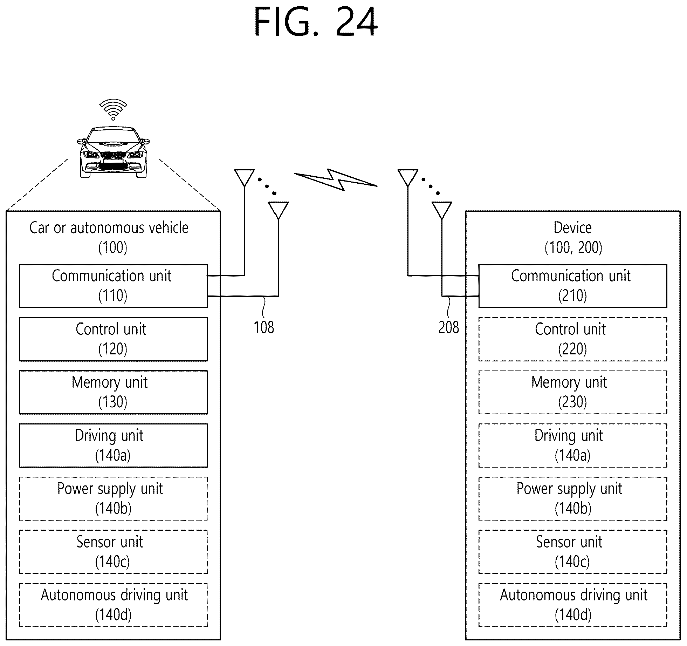

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
receiving, from a second device, a first inter-device reference signal within a first time region, based on a first angle; and
transmitting a second inter-device reference signal within the first time region, based on a second angle obtained by applying a first angle difference to the first angle,
wherein each of at least one angle difference including the first angle difference is related to each of at least one time region including the first time region, and
wherein the at least one time region is repeated.

2. The method of claim 1, wherein the second inter-device reference signal is received to a third device based on a third angle,
wherein information for the first time region is obtained by the third device based on the second inter-device reference signal,
wherein information for the first angle difference is obtained by the third device based on the first time region, and
wherein the information for the first angle difference and information for the third angle are reported to a fourth device.

3. The method of claim 2, wherein the third device is the same as the second device.

4. The method of claim 2, wherein the fourth device is a location management function, LMF.

5. The method of claim 2, further comprising:
receiving, from the second device, a third inter-device reference signal within a second time region, based on a fourth angle; and
transmitting a fourth inter-device reference signal within the second time region, based on a fifth angle obtained by applying a second angle difference to the fourth angle,
wherein the second angle difference is included in the at least one angle difference,
wherein the second time region is included in the at least one time region,
wherein the fourth inter-device reference signal is received to a fifth device based on a sixth angle,
wherein information for the second time region is obtained by the fifth device based on the fourth inter-device reference signal,
wherein information for the second angle difference is obtained by the fifth device based on the second time region,
wherein the information for the second angle difference and information for a sixth angle are reported to the fourth device, and
wherein a positioning for the second device is performed by the fourth device, based on the information for the first angle difference, the information for the second angle difference, the information for the third angle, and information for the fourth angle.

6. The method of claim 1, wherein the second inter-device reference signal is a signal modulated based on a first coding, and
wherein each of at least one coding including the first coding is related to each of the at least one time region.

7. The method of claim 6, wherein the second inter-device reference signal is transmitted to a third device,
wherein information for the first time region is obtained by the third device, based on the first coding,
wherein information for a distance value between the first device and the second device is obtained by the third device, based on the first time region.

8. The method of claim 6, wherein the information for the distance value or information for the first coding is reported to a fourth device.

9. The method of claim 1, wherein the second inter-device reference signal is a signal obtained by applying a first frequency shift value, and
wherein each of at least one frequency shift value including the first frequency shift value is related to each of the at least one time region.

10. The method of claim 9, wherein the second inter-device reference signal is transmitted to a third device,
wherein information for the first time region is obtained by the third device, based on the first frequency shift value, and
wherein information for a distance value between the first device and the second device is obtained by the third device, based on the first time region.

11. The method of claim 9, wherein the information for the distance value or information for the first frequency shift value is reported to a fourth device.

12. The method of claim 1, wherein the first device is a reconfigurable intelligent surface, RIS.

13. The method of claim 1, wherein the second inter-device reference signal is a signal reflected from the first inter-device reference signal.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
receiving, from a second device, a first inter-device reference signal within a first time region, based on a first angle; and
transmitting a second inter-device reference signal within the first time region, based on a second angle obtained by applying a first angle difference to the first angle,
wherein each of at least one angle difference including the first angle difference is related to each of at least one time region including the first time region, and
wherein the at least one time region is repeated.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
receiving, from a second UE, a first inter-UE reference signal within a first time region, based on a first angle; and
transmitting a second inter-UE reference signal within the first time region, based on a second angle obtained by applying a first angle difference to the first angle,
wherein each of at least one angle difference including the first angle difference is related to each of at least one time region including the first time region, and
wherein the at least one time region is repeated.

16. A non-transitory computer-readable storage medium storing instructions that, based on being executed, cause a first device to:
receive, from a second device, a first inter-device reference signal within a first time region, based on a first angle; and
transmit a second inter-device reference signal within the first time region, based on a second angle obtained by applying a first angle difference to the first angle,
wherein each of at least one angle difference including the first angle difference is related to each of at least one time region including the first time region, and
wherein the at least one time region is repeated.

17. A method for performing, by a second device, wireless communication, the method comprising:
transmitting, to a first device, a first inter-device reference signal; and
receiving, from the first device, a second inter-device reference signal,
wherein the first inter-device reference signal is received to the first device within a first time region, based on a first angle,
wherein the second inter-device reference signal is transmitted from the first device within the first time region, based on a second angle obtained by applying a first angle difference to the first angle, and
wherein each of at least one angle difference including the first angle difference is related to each of at least one time region including the first time region.

18. The method of claim 17, wherein the at least one time region is repeated.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
transmitting, to a first device, a first inter-device reference signal; and
receiving, from the first device, a second inter-device reference signal,
wherein the first inter-device reference signal is received to the first device within a first time region, based on a first angle,
wherein the second inter-device reference signal is transmitted from the first device within the first time region, based on a second angle obtained by applying a first angle difference to the first angle, and
wherein each of at least one angle difference including the first angle difference is related to each of at least one time region including the first time region.

20. The second device of claim 19, wherein the at least one time region is repeated.
